(19) Europäisches Patentamt / European Patent Office / Office européen des brevets

(11) **EP 2 289 138 B1**

(12) **EUROPEAN PATENT SPECIFICATION**

(45) Date of publication and mention
of the grant of the patent:
**17.08.2016 Bulletin 2016/33**

(51) Int Cl.:
***H02H 7/26*** *(2006.01)*    ***H02H 7/30*** *(2006.01)*
***H02B 11/02*** *(2006.01)*

(21) Application number: **09745793.1**

(22) Date of filing: **14.05.2009**

(86) International application number:
**PCT/EP2009/055845**

(87) International publication number:
**WO 2009/138461 (19.11.2009 Gazette 2009/47)**

(54) **A TRANSFORMATION SUBSTATION**

TRANSFORMATIONS-UNTERWERK

CENTRE DE TRANSFORMATION ÉCOLOGIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **14.05.2008 EP 08008899
04.08.2008 EP 08013925**

(43) Date of publication of application:
**02.03.2011 Bulletin 2011/09**

(73) Proprietor: **EMAC (Electromechanical
Applications Consulting)
Limited
2063 Nicosia (CY)**

(72) Inventor: **ARGYROPOULOS, Konstantinos
GR-11367 Athens (GR)**

(74) Representative: **Wheatley, Alison Clare
Haseltine Lake LLP
Redcliff Quay
120 Redcliff Street
Bristol BS1 6HU (GB)**

(56) References cited:
**EP-A- 0 780 951      EP-A- 1 022 757
ES-A1- 2 212 747      FR-A- 2 341 972**

## Description

## FIELD OF THE INVENTION

The invention relates to a transformation substation for transforming electrical energy from a medium voltage (1-45 KV) to a low voltage. More specifically the present invention refers to such transformation substations which are connected in series in an electrical medium voltage, three-phase, distribution line between three-phase input terminals and three-phase output terminals of the distribution line.

## BACKGROUND OF THE INVENTION

Transformation substations, also known as a transformation centre or a secondary substation, are intended to transform electrical energy from a medium voltage to a low voltage. Such transformation substations essentially comprise one or more distribution transformers with corresponding medium voltage switchgear or switching arrangement usually called a Ring Main Unit (RMU), for properly conducting the current from the distribution line to the transformers. The substations have the capability of identifying the location of a short circuit in the distribution line or in the distribution transformer, isolating the fault and timely restoring service. These transformation substations also contain other components or relevant materials such as the interconnection buswork of the switchgear, current and voltage sensing devices, the suitable dielectrics required for the switchgear, sensors, metering devices, fault indicators and protection relays, telecommunication and remote control systems and low voltage panels.

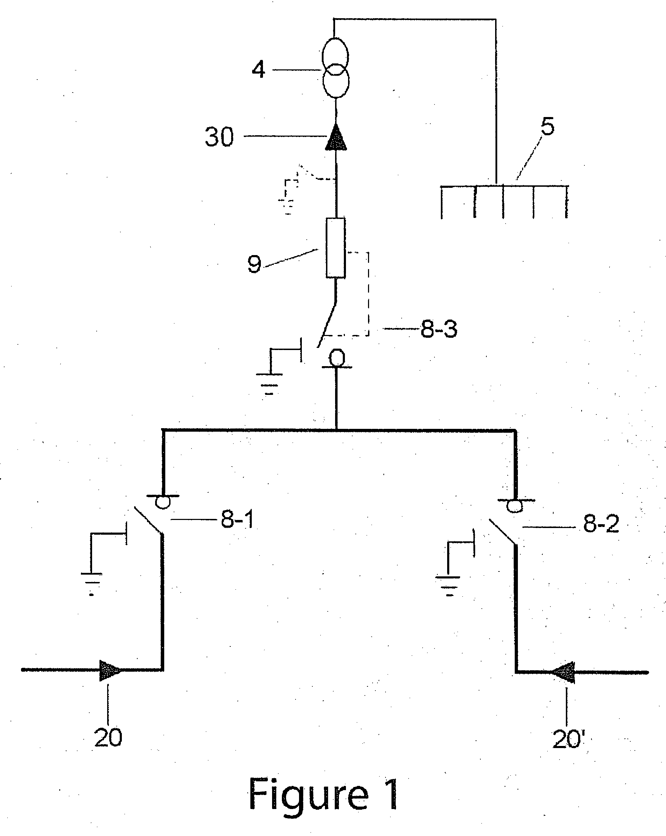

A single line diagram of a conventional transformation centre or substation can be seen in Figure 1 showing the following essential components: a distribution transformer 4, a low voltage panel 5, a plurality of switches 8-1, 8-2, 8-3, called switchgear or Ring-Main-Unit (RMU) and a set of three HRC fuses 9. Input and output terminals 20, 20' of the distribution line, and medium voltage terminals 30 of the distribution transformer 4 are also indicated. It is pointed out that the terms "transformation centre", "transformation substation", "secondary substation" and the like are used according to the present invention to refer to any device or apparatus electrically connected in a medium voltage distribution line and generally operating for transforming medium voltage into low voltage energy.

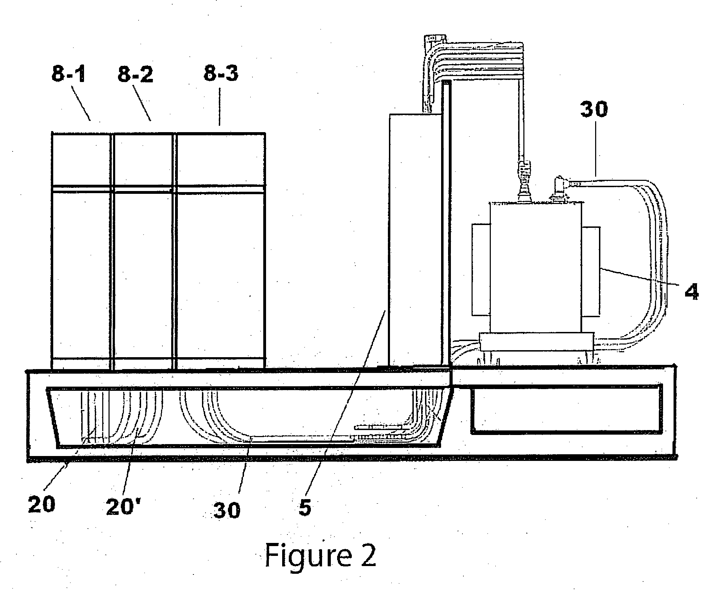

In Figure 2, the same components as those illustrated in Figure 1 can be seen in a side view showing a physical arrangement of the same.

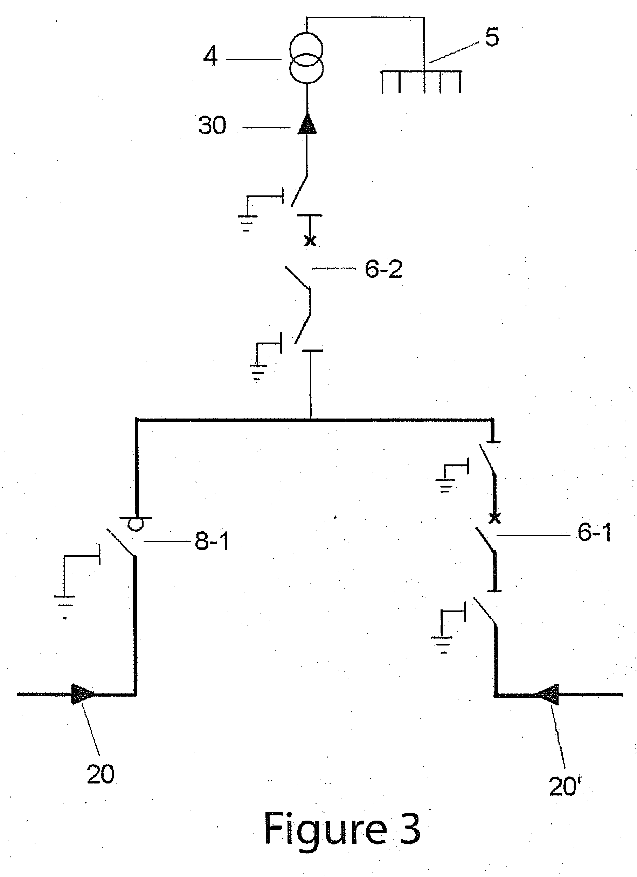

Figure 3 shows another single line diagram of an improved conventional transformation substation in which two breakers 6-1 and 6-2 have been added with the purpose of improving the service performance over the transformation substation in Figure 1. As previously mentioned, the addition of these two breakers 6-1 and 6-2 (one for the protection of the distribution transformer 4 and one for the automatic sectionalization of the medium voltage, three-phase distribution line) although remarkable from the point of view of failure sectionalization and location, compared to previous transformation substations, has the drawback of an increased cost associated with the two-breaker configuration.

Currently, the switchgear (RMU) predominantly utilized for connecting, disconnecting and by-passing the distribution transformer usually includes the combination of three switches 8-1, 8-2, 8-3 (more specifically for Load Break Fault Make LBFM switches) as shown, for example, in Figure 1, using predominately SF6 as an insulating and electrical current interrupting dielectric and HRC (High Rupturing Capacity) fuses 9 for the transformer protection as the per the single line diagram of Figure 1 where the conventional interconnection schematic between the three LBFM switches 8-1, 8-2, 8-3, the three HRC fuses 9, the transformer medium voltage terminals 30 and the input 20 and output 20' distribution line terminals is shown.

ES2212747 by O. Ormazabal discloses a typical transformation substation shown in Fig.1 the single line diagram of the interconnection scheme of all the components involved with a detailed description in page 1, line 21-61 and page 4, line 4-13.

FR2341972 by MERLIN GERIN, discloses in Fig. 1 and 2 the physical layout of a typical transformation substation.

It is known in the art that the erratic operation (without a failure in the distribution transformer) of the HRC fuses 9 is responsible for a great number of nuisance service operations by the distribution network maintenance crew; these fuses are considered to operate spuriously up to 85% of the cases. In ungrounded and Petersen coil grounded distribution lines and systems the ground fault is mostly substantially lower than the distribution transformer load current and therefore the HRC fuses cannot protect the transformer against ground faults which statistically constitute 95% of the faults in the transformers.

On the other hand, LBFM switches have a limited working number of operations in closing against a fault, and operation thereof depends on their prior activity. Therefore, operators are not aware of future reliability of such a switch when manual closing it against a fault on an energized distribution line.

Furthermore, the mentioned shortcomings of the LBFM switches lead to the following drawback: large number of operations (automatic and manual) of the High Voltage / Medium Voltage (HV/MV) power substation main distribution line breaker, causing long outage periods and long nuisance to the consumers supplied by the affected distribution line. And until the fault is located, the entire distribution line is shut down, thus resulting in an extended outage (hours/customer/year); therefore utilities have to pay severe penalties due to accumulation of outages per year.

One possible known solution is use of SCADA-based systems. The disadvantages associated with these systems are the need of remotely operated motorized LBFM switches and remote fault indicators which results in an incremented infrastructure cost regarding motors, fault indicators, data or telecommunications networks, RTU's and the like. Further, the inconvenience of the limited working life of the LBFM switches remains unsolved thus continuing the necessity of using the HV/MV power substation main distribution line breaker as the only automatic short circuit interrupting device with the negative consequences as described above and the telecommunication infrastructure used shows data transmission-specific shortcomings.

Since the majority of these transformation substations are serving urban areas where the value of real estate is very high and availability of space is extremely limited, the need for optimizing the size of the transformation centres and more particularly the size of the medium voltage switchgear, resulted in using SF6 as an interrupting and insulating dielectric instead of air, with excellent results in reducing the overall size of the transformation centres. However according to the Kyoto protocol on climate change, SF6 is documented as a very potent greenhouse gas and therefore the need to reduce or possibly eliminate its use is obvious.

Electrical load current interruptions in SF6 generate toxic materials, and special precautions are required for handling and maintaining used switchgear, or in the event of an accident.

The pressure to monitor and register the SF6 content by an electrical utility is becoming an expensive obligation in many countries.

For all of the reasons mentioned above, alternatives which eliminate the use of SF6 without increasing the overall size of the transformation centre are actively pursued.

Another dielectric which could be used instead of SF6 is mineral or silicone oil or esters, as they are already used in transformers as dielectrics, or solid insulation.

The limitation these dielectric fluids have is the difficulty to fulfil the "internal arc test" as per the relevant IEC standard and therefore it is impossible to simply substitute the SF6 with these dielectric fluids without a modification in the conventional interconnection system of the transformation substation switchgear and components and the appropriate design of the electrical apparatus containers.

In order to increase the reliability in the medium voltage distribution line and more specific the underground cable distribution network in addition to the main feeder breaker in the HV/MV power substation, several other breakers are required in series with the main feeder breaker along the distribution line, in order to increase the number of automatic sectionalizing points which will improve reliability by identifying faster the position of a fault, reconfiguring the network automatically and reducing the affected customers by a power failure to the minimum. For this reason several electrical utilities replace one of the SF6 LBFM switches with a vacuum breaker 6-1, as shown in Figure 3 without modifying the conventional interconnection system of the transformation centre.

In order to reduce the consequences of the erratic malfunctioning of the HRC fuses 9 and protect the medium voltage distribution line against ground faults in the distribution transformers, which in the case of ungrounded or Petersen-coil grounded distribution lines or systems can not be identified by the HRC fuses 9, several electrical utilities replace the commonly used combination of SF6 load break switch 8-3 and HRC fuses 9 shown in Figures 1 and 2 with a vacuum breaker 6-2, as shown in Figure 3, without changing at all the existing conventional interconnection system of the transformation substations. Cost of components (two medium voltage breakers), substation footprint (same as conventional ones) and use of SF6 (which cannot be eliminated) are some of the drawbacks of this solution.

## SUMMARY OF THE INVENTION

The invention seeks to provide an interconnection scheme between the distribution transformer, the medium voltage switchgear and the input and output terminals of the distribution line, the application of which will fulfill the distribution line and transformer protection requirements, eliminating the HRC fuses and provide automatic line sectionalization, thus increasing significantly the quality of service in a cost efficient way as well as eliminate the use of SF6 whilst maintaining a compact transformation substation. The invention also seeks to provide appropriate containers for the switchgear and optionally including the transformer which will fulfill the requirements of the internal arc test conditions imposed by the relevant IEC standards, using air, SF6, mineral or silicone oil, esters, or solid material as an electrical insulating medium.

According to the present invention, there is provided a transformation substation, transforming electrical energy from a medium voltage to a low voltage, the transformation substation being connected series in an electrical medium voltage three phase distribution line between a three-phase input terminals and a three-phase output terminals of the distribution line. The transformation substation further comprises a medium voltage breaker electrically connected in parallel across the terminals of at least part of the medium voltage switchgear, and the breaker is also electrically connected in series with the medium voltage electrical distribution line between the three-phase input terminals and the three-phase output terminals of the distribution line. Also, the medium voltage breaker is interlocked with the medium voltage switchgear manually and/or electrically and/or automatically.

According to one embodiment of the present invention, the medium voltage switchgear of the transformation substation comprises: a three-position (a-OFF-b), load break switch with its set of three movable contacts electrically connected to the three-phase medium voltage terminals of the at least one distribution transformer, its first set of three stationary contacts connected to a first set of three bushings of the breaker and to a first set of three stationary contacts of a three-position off-load disconnecting and grounding switch, and its third set of three stationary contacts electrically connected to a second set of three bushings of the breaker and to a first set of three stationary contacts of a further three-position off-load disconnecting and grounding switch, such that the grounding set of three stationary contacts of the three-position off-load disconnecting and grounding switch is electrically connected to ground and a set of three movable contacts of the three-position off-load disconnecting and grounding switch is connected to the three-phase input terminals of the distribution line and a grounding set of three stationary contacts of the further three-position off-load disconnecting and grounding switch is electrically connected to ground and a set of three movable contacts of the further three-position off-load disconnecting and grounding switch is electrically connected to the three-phase output terminals of the distribution line, and a grounding switch is electrically connected to the set of three movable contacts of the three-position (a-OFF-b), load break switch which are electrically connected to the three-phase medium voltage terminals of the at least one distribution transformer.

According to a further embodiment of the present invention as set forth in the previous paragraph, the grounding switch is eliminated and a three-position, load break switch is electrically connected between the three-phase medium voltage terminals of the at least one distribution transformer and the three-position load break and grounding switch, such that one set of three stationary contacts of the three-position, load break switch is electrically connected to ground, other set of three stationary contacts of the three-position, load break switch is connected to the set of three movable contacts of the switch three-position load break and grounding, and a set of three movable contacts of the three-position, load break switch is electrically connected to the medium voltage terminals of the at least one distribution transformer.

According to a still further embodiment of the present invention, two grounding switches are respectively electrically connected to the two sets of three stationary contacts of the three-position, load break and grounding switch, both three-position off-load disconnecting and grounding switches are eliminated and the medium voltage breaker is of a medium voltage type; the bushings of the withdrawable breaker being directly electrically connected to the three-phase input terminals and the three-phase output terminals respectively of the distribution line.

According to another embodiment of the present invention as set forth in the previous paragraph, the grounding switch is removed, and a three-position load break and grounding switch is electrically connected between the three-phase medium voltage terminals of the at least one distribution transformer and the three-position (a-OFF-b) load break switch, such that one set of three stationary contacts of the three-position load break and grounding switch is electrically connected to ground, another set of three stationary contacts of the three-position load break and grounding switch is electrically connected to the set of three movable contacts of the three-position (a-OFF-b) load break switch, and a set of three movable contacts of the three-position load break and grounding switch is electrically connected to the three-phase medium voltage terminals of the at least one distribution transformer.

According to yet another embodiment of the present invention, the three-position, load break and grounding switch and the two grounding switches connected to the three-position, load break and grounding switch are removed, and two further three-position load break and grounding switches are electrically connected between the three-phase medium voltage terminals of the at least one distribution transformer and the withdrawable medium voltage breaker, such that a first set of stationary contacts of one of the further three-position load break and grounding switches is electrically connected to the three-phase medium voltage terminals of the at least one distribution transformer, a second set of stationary contacts of the one of the further three-position load break and grounding switches is electrically connected to ground and a movable set of three stationary contacts of the one of the further three-position load break and grounding switches is connected to a first set of three bushings of the withdrawable breaker which are directly electrically connected to the three-phase input terminals of the distribution line, a first set of three stationary contacts of the other of the further three-position load break and grounding switches is electrically connected to the three-phase medium voltage terminals of the at least one distribution transformer, a second set of three stationary contacts of the other of the further three-position load break and grounding switches is electrically connected to ground and a movable set of three stationary contacts of the other of the further three-position load break and grounding switches is connected to the second set of three bushings of the withdrawable breaker which are directly electrically connected to a the three-phase output terminals of the distribution line. The interlocking function of the two load brake and grounding switches is that when the load break contacts of switch the one switch are closed (N.C.) the load break contacts of the other switch are open (N.O.) and vice-versa.

According to a further embodiment of the present invention, the grounding switch is removed and a three-position load break and grounding switch is electrically connected between the distribution transformer and the three-position load break and grounding switches, such that one of the sets of stationary contacts of the switch is electrically connected to ground, another set of three stationary contacts of the switch is electrically connected to the respective sets of stationary contacts of switches which are respectively electrically connected to each other, and a set of three movable contacts of the switch are electrically connected to the three-phase medium voltage terminals of the at least one distribution transformer.

In accordance to a further embodiment of the present invention: the three-position (a-OFF-b), load break switch and the three-position, off-load disconnecting, grounding switches are removed; two three-position, load break and grounding switches are electrically connected between the three-phase medium voltage terminals of the at least one distribution transformer and the medium voltage vacuum breaker, such that a first set of stationary contacts of the switch is electrically connected to the three-phase medium voltage terminals of the at least one distribution transformer, a second set of stationary contacts of the switch is electrically connected to ground and a movable set of three stationary contacts of the switch is connected to a first set of three bushings of the breaker, a first set of three stationary contacts of the switch is electrically connected to the three-phase medium voltage terminals of the at least one distribution transformer, a second set of three stationary contacts of the switch is electrically connected to ground and a movable set of three stationary contacts of the switch is connected to the second set of three bushings of the withdrawable breaker; and, two disconnecting switches are electrically connected such that a first set of three contacts of a first disconnecting switch is electrically connected both to a first set of three bushings of the breaker and to a set of three movable contacts of switch, and a second set of contacts the first disconnecting switch is electrically connected to the three-phase input terminals of the distribution line, and a first set of three contacts of a second disconnecting switch is electrically connected both to the second set of three bushings of the breaker and to the set of three movable contacts of switch, and a second set of contacts of the second disconnecting switch is electrically connected to the three-phase output terminals of the distribution line.

According to yet another embodiment of the present invention, the grounding switch is removed and a three-position, break load and grounding switch is electrically connected between the distribution transformer and the three-position, load break and grounding switches, such that one set of three stationary contacts of the switch are electrically connected to ground, an other set of three stationary contacts of the switch are electrically connected to the respective sets of three stationary contacts of switches which are respectively electrically connected to each other, and a set of three movable contacts of the switch is electrically connected to the three-phase medium voltage terminals of the at least one distribution transformer.

According to still a further embodiment of the present invention, two, two-position, load break switches are respectively substituted for the two three-position, load break and grounding switches such that a first set of three stationary contacts of the load break switch is electrically connected to the three-phase medium voltage terminals of the at least one distribution transformer and a second set of three movable contacts of the switch is electrically connected to a first set of three bushings of the breaker, and a first set of three stationary contacts of the switch is electrically connected to the three-phase medium voltage terminals of the at least one distribution transformer and the second set of three movable contacts of the switch is electrically connected to the second set of three bushings of the breaker, two three-position off-load disconnecting and grounding switches are respectively substituted for the two disconnecting switches, such that the grounding set of three stationary contacts of the switch is electrically connected to ground, the other set of three stationary contacts of switch is electrically connected both to the first set of three bushings of the breaker and to the second set of three movable contacts of switch and a set of three movable contacts of the switch is connected to the three-phase input terminals of the distribution line and the grounding set of three stationary contacts of the switch is electrically connected to ground, the other set of three stationary contacts of switch is electrically connected both to the second set of three bushings of the breaker and to a second set of three movable contacts of switch and the set of three movable contacts of the switch is connected to the three-phase output terminals of the distribution line.

In another embodiment of the present invention, the grounding switch is removed and a three-position, load break and grounding switch is electrically connected between the distribution transformer and the load break switches, such that a set of three stationary contacts of the switch is electrically connected to ground, another set of three stationary contacts of the switch is electrically connected to the two respective sets of three stationary contacts of the switches which are respectively electrically connected to each other, and the set of three movable contacts of the switch is electrically connected to the three-phase medium voltage terminals of the at least one distribution transformer.

In accordance with a further embodiment of the present invention, the at least part of the switchgear comprises: a V-blade-type, three-position, disconnect, grounding and load break switch with its set of three movable contacts electrically connected to the three-phase input terminals of the distribution line, a first set of three stationary contacts with transformer current load braking capacity electrically connected to the three-phase medium voltage terminals of the at least one distribution transformer, a second set of three stationary contacts electrically connected to a first set of three bushings of the breaker, and the grounding third set of three stationary contacts electrically connected to ground; a further V-blade-type, three-position, disconnect, grounding and load break switch with its set of three movable contacts electrically connected to the three-phase output terminals of the distribution line, a first set of three stationary contacts with transformer current load braking capacity electrically connected to the three-phase medium voltage terminals of the at least one distribution transformer, a second set of three stationary contacts electrically connected to a second set of bushings of the vacuum breaker, and the grounding third set of its stationary contacts electrically connected to ground; and, an optional grounding switch electrically connected to the three-phase medium voltage terminals of the at least one distribution transformer. The interlocking function between 3A and 3A' is such that when the load breaking blade of switch 3A is in the position of connecting the input line terminal 20 with the transformer terminal 30 (N.C.), the respective load breaking blade of 3A' should be in the open position (N.O.) and vice-versa

According to another embodiment of the present invention as set forth in the previous paragraph, the grounding switch is removed and a three-position, load break and grounding switch is electrically connected between the distribution transformer and both V-blade-type, three-position, disconnect, grounding and load break switches, such that one set of three stationary contacts of the switch is electrically connected to ground, another set of three stationary contacts of the switch is electrically connected to the respective sets of stationary contacts of switches which are respectively electrically connected to each other, and the set of three movable contacts of the switch is connected to the three-phase medium voltage terminals of the at least one distribution transformer.

In accordance with a further embodiment of the previous invention at least one of the above-mentioned switches is of a medium voltage type.

According to still a further embodiment of the present invention at least one of the above-mentioned switches is of a low amperage rating type.

In another embodiment of the present invention, the low amperage rating has a maximum value of 100A.

In yet another embodiment of the present invention, at least one the above-mentioned switches is of a fault make type.

According to another embodiment of the present invention the above-mentioned switches are according to the IEC standards.

According to yet another embodiment of the present invention the dielectric used for the switches and the breaker is one of air, esters, mineral or silicone oil, solid dielectric and SF6, or a combination thereof.

In a further embodiment of the present invention, both the breaker and the different switches are located in the same container, with its corresponding dielectric; and the container is connected, through at least one pressure vent located close to or at the bottom of the container, to a sub-container. The at least one distribution transformer can be located inside the container.

According to a further embodiment of the present invention the container is filled with an oxygen free dielectric fluid, and the sub-container is filled with air or with an oxygen-free gas and optionally a heat absorption material. The oxygen-free gas can be nitrogen

According to another embodiment of the present invention, the sub-container is provided with at least one further vent connecting sub-container with a further sub-container, each of the sub-containers being filled with either an oxygen-free gas or air, and optionally a heat absorption material. Also the further sub-container is constructed to create a cooling labyrinth from the at least one vent to at least one optional vent, the vents operating in a cascading manner.

According to a further embodiment of the present invention, the breaker is located in its own enclosure, outside the container, is of the withdrawable type and is connected to the above-mentioned switches through a set of six feed-through breaker-bushings.

In a further embodiment of the present invention the container is provided with a set of six bushings for the connections with the three-phase input terminals the three-phase output terminals of the medium voltage distribution line, an additional similar set of three bushings for the cable connections with the breaker and a set of three bushings for the connection with the three-phase medium voltage terminals of the at least one distribution transformer.

A medium voltage withdrawable breaker of the type used in switchgear of transformation substations for supplying energy and protection to at least one distribution transformer comprises: a first set of three bushings corresponding and electrically connected to the three-phase input terminals and a second set of three bushings corresponding and electrically connected to the three-phase output terminals of the medium voltage distribution line, for conducting the main load current of the medium voltage distribution line; a first set of three feed-through bushings corresponding and electrically connected to the first set of three bushings electrically connected with the three-phase input terminals and a second set of three feed-trough bushings corresponding and electrically connected to the second the set of three bushings electrically connected to the three-phase output terminals of the medium voltage distribution line, for conducting the load current of the at least one distribution transformer.

According to another embodiment of the present invention, the transformation substation as set forth in the previous paragraphs comprises sensing and microprocessor based protecting devices and relevant communication, programming and coordination means adapted to operate the breaker interlocked with relative switches for automatically protecting and sectionalizing the distribution line in accordance with data collected and processed from the sensing and protecting devices and provide protection to the at least one distribution transformer.

In accordance to a further embodiment of the present invention, the sensing and protecting devices comprise devices for sensing current, voltage, pressure, temperature, light, dielectric fluid level and the like and are located in at least one of the above mentioned container and sub-containers and/or in the at least one distribution transformer.

In a further embodiment of the present invention, the processing means of the breaker microprocessor relay in each respective breaker is arranged, upon occurrence of an overcurrent fault in the respective distribution transformer to trigger the opening operation of the respective breaker and subsequently to automatically operate, during the corresponding dead time interval and before the first and final reclosing operation of the breaker, the relevant interlocked switch(es) in the respective switchgear such that the distribution transformer becomes electrically disconnected and isolated and/or upon occurrence of a zero sequence fault being lower in intensity than a specific value, defined by the line operator, to trigger the opening operation of the relevant switch(es) in the respective switchgear such that the distribution transformer becomes electrically disconnected and isolated, without triggering any opening operation of the breaker due to the occurrence of a lower than a specific value zero sequence fault in the respective distribution transformer.

A further object of the present invention is a system for protecting, automatically sectionalizing and reconfiguring a medium voltage distribution line against electrical faults, in which system:

- for an electrical fault generating any of $I_>$, $I_{>>}$, the N breaker relays plus the power substation breaker relay in the line, N+1 relays in total, are considered as grouped in M groups, $G_0$, $G_1$, ... , $G_i$, ... $G_{M-1}$, each of a respective number $NG_0$, $NG_1$, ... $NG_i$, ... $NG_{M-1}$ of consecutive relays, $RL_0^i$, $RL_1^i$, ..., $RL_l^i$, ... , $RL_{NG_i-1}^i$, starting from and including the power substation breaker relay, and
the respective trip time intervals for all the respective breaker relays in a given group $G_i$ with a given value of i are arranged to have substantially the same value, and the trip time interval for any breaker relay in a group $G_i$ is arranged to be greater than the trip time interval for any breaker relay in a consecutive group $G_{i+1}$, the difference between trip time intervals of consecutive groups being determined by the protection operator(s) in charge of the medium voltage distribution line;
the dead time interval for each relay $RL_l^i$ after the first breaker tripping is arranged to have substantially the same value for a given value of the subscript $l$, and to be less than the dead time interval for a consecutive relay $RL_{l+1}^i$ in the same group $G_i$, and the

dead time interval after the second breaker tripping and before the second reclosing operation is arranged to have the same value for all the breaker relays, the difference between dead time intervals of consecutive relays being determined by the protection operator(s) in charge of the medium voltage distribution line;
wherein each breaker relay is configured for locking out its respective breaker after two trips provided that the corresponding reclosing time interval after the first breaker trip and the relevant group trip time show substantially the same value and/or the pre-programmed timer of each relay which is triggered by the first trip operation and triggers the lock-out of the breaker if the breaker is open at the end of the timers programmed time, considering specified tolerances, and the second dead time interval before the second reclosing operation being arranged to have substantially the same value for all the breaker relays;
- for an electrical fault generating a directional zero sequence current $I_0$, the N+1 breaker directional zero sequence relays are considered as $RL_0$, ..., $RL_j$, ..., $RL_N$, and the trip time for any relay $RL_j$ is arranged to have a value greater than the trip time for a consecutive relay $RL_{j+1}$, the difference between trip times of consecutive relays being determined by the protection operator(s) in charge of the medium voltage distribution line, and the breaker relays being configured for locking out the respective breakers after one trip upon occurrence of the electrical fault generating a directional zero sequence current $I_0$.

According to another embodiment of the present invention, in the system for protecting, automatically sectionalizing and reconfiguring a medium voltage distribution line against electrical faults:

- for the electrical fault generating any of $I_>$, $I_{>>}$, each breaker relay $RL_l^i$ is arranged to have a trip time interval equal to $t_{trip\_}G_0 - i * \Delta_{OVtrip}$, the $t_{trip\_}G_0$ being the trip time for all the breaker relays $RL_l^0$ in the group $G_0$, the value of i being the subscript of the group $G_i$ to which the each breaker relay $RL_l^i$ belongs, and the $\Delta_{OVtrip}$ being a time increment, the $t_{trip\_G0}$ and $\Delta_{OVtrip}$ being determined by the protection operator(s) in charge of the medium voltage distribution line;
a dead time interval - opened breaker contacts - after the first breaker tripping equal to $t_d * (l + 1)$, the $t_d$ being the dead time interval of the first breaker relay $RL_0^i$ of each group $G_i$ and being determined by the protection operator(s) in charge of the medium voltage line, and the value of l being the subscript of the breaker relay $RL_l^i$, in each respective group $G_i$,

- for an electrical fault generating a directional zero sequence current $I_0$, each $RL_j$ is arranged to have a trip time equal to $\Delta_{I0trip}$ * (N - j + 1), wherein j is the subscript of the breaker relay $RL_j$ in question, and $\Delta_{I0trip}$ is the tripping time of the breaker relay $RL_N$ and determined by the protection operator(s) in charge of the medium voltage distribution line.

In another embodiment of the present invention, in the above-mentioned system, the means used to program the required breaker relays with inputs such as defining M groups, $G_0$, $G_1$, ... , $G_i$, ... $G_{M-1}$, respective numbers $NG_0$, $NG_1$, ... $NG_i$, ... $NG_{M-1}$ of consecutive relays,

$$RL_0^i, \ RL_1^i, \ ..., \ RL_I^i, \ ... \ , \ RL_{NG_i}^i, \ \text{in each group}$$

$G_i$, etc..., the parameters, such as $t_{trip\_}G_0$, i, $\Delta_{OVtrip}$, etc..., the bidirectionability and sensor readings and the like are the timing and data processing means included in each one of the breaker relays.

Finally, according to another embodiment of the present invention, the breaker relays are microprocessor-based breaker relays and the timing and data processing means are the microprocessor(s) included in each respective microprocessor-based breaker relay.

## DESCRIPTION OF THE DRAWINGS

For a more complete understanding of the present invention, reference is made to the following description in conjunction with the accompanying drawings, in which:

Figure 1 shows the single line electrical diagram of a conventional transformation substation used in current medium voltage distribution networks;
Figure 2 shows a side view of a conventional transformation substation corresponding to the electrical diagram in Figure 1;
Figure 3 shows an electrical diagram of an improved conventional transformation substation used in some current medium voltage distribution networks;

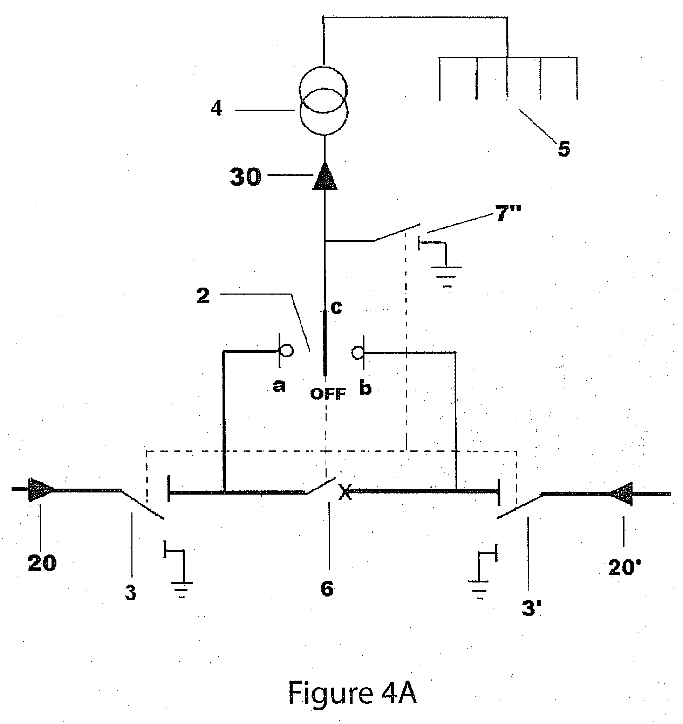

Figures 4A, 4B, 5A, 5B, 6A, 6B, 7A, 7B, 8A, 8B, 9A and 9B show electrical diagrams of respective embodiments of the transformation substation of the present invention;

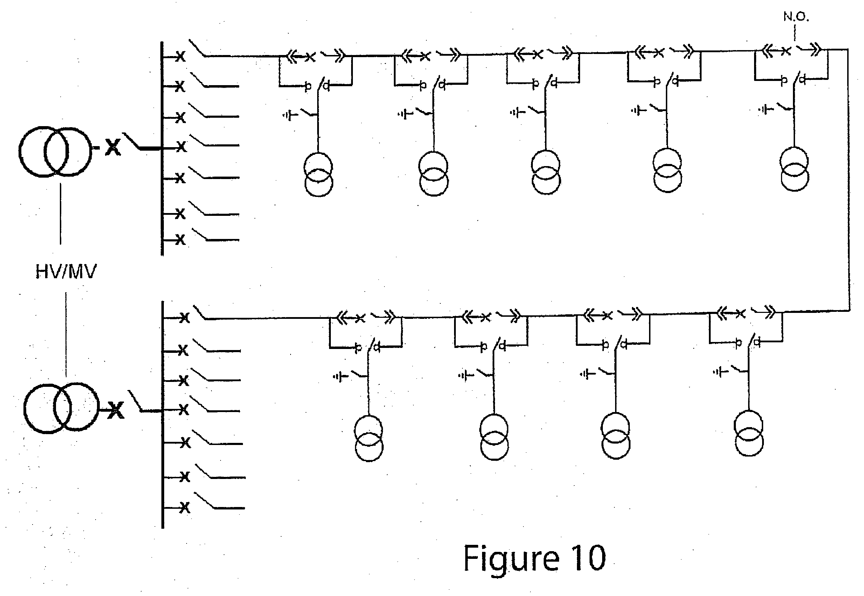

Figure 10 shows a diagram illustrating the electrical interconnections between transformation substations in a distribution line, according to the present invention;

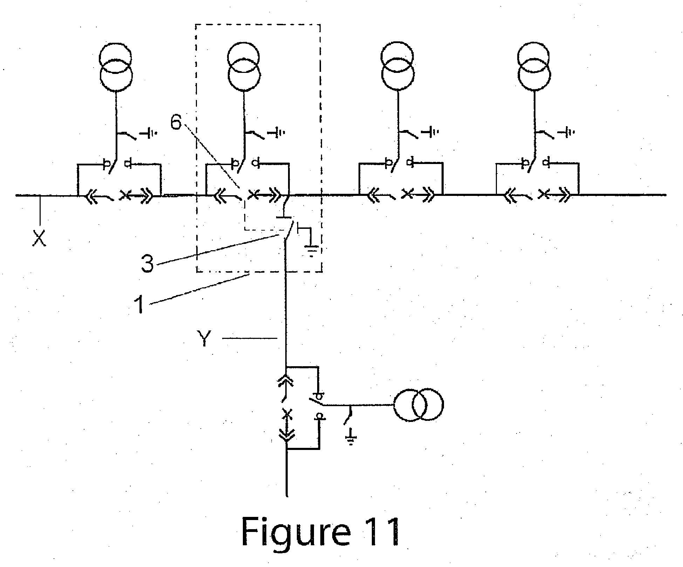

Figure 11 shows a T-off branch (Y) of a medium voltage distribution line using the transformation substations of the present invention;

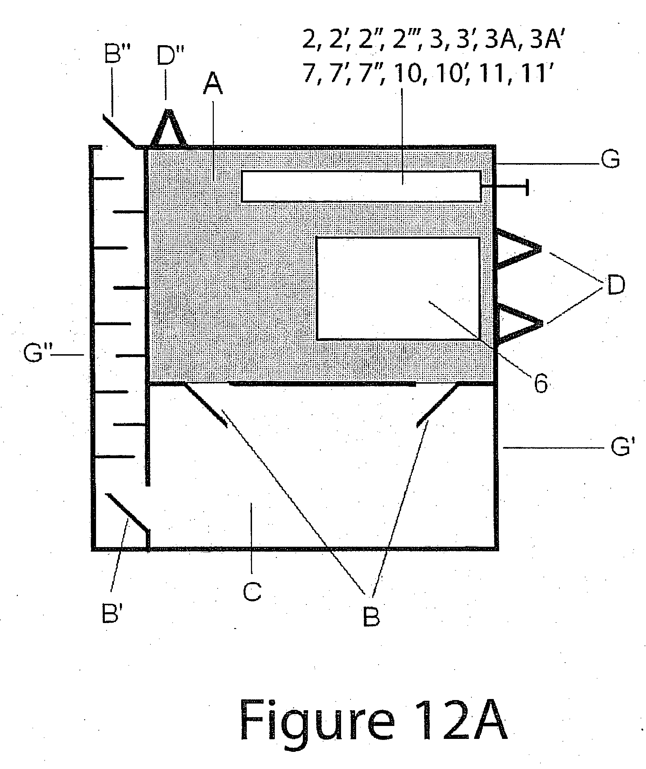

Figures 12A, 12B, 13A, 13B, 14A and 14B show diagrams of embodiments of the transformation substation according to the present invention, illustrating different arrangements of the containers therein;

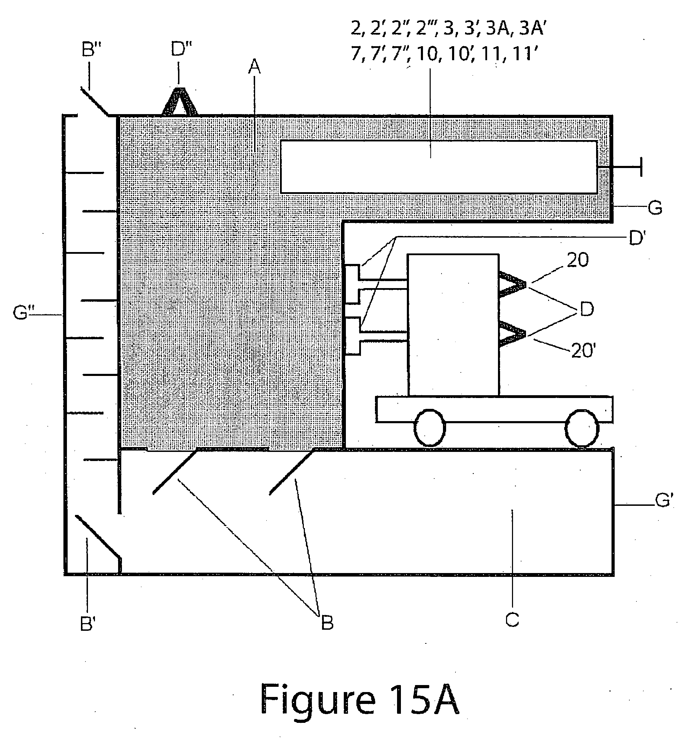

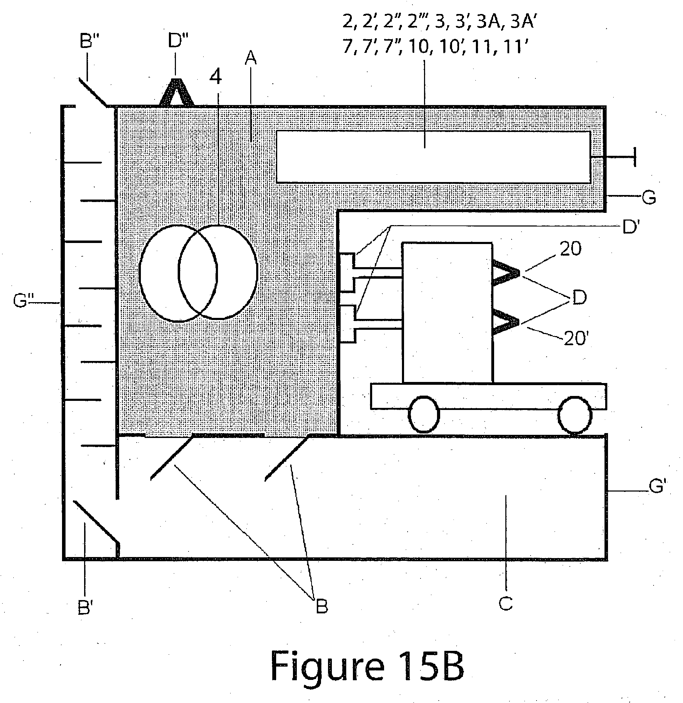

Figures 15A and 15B show as well, diagrams of embodiments of the transformation substation according to the present invention, illustrating a withdrawable breaker with a set of breaker bushing arrangement.

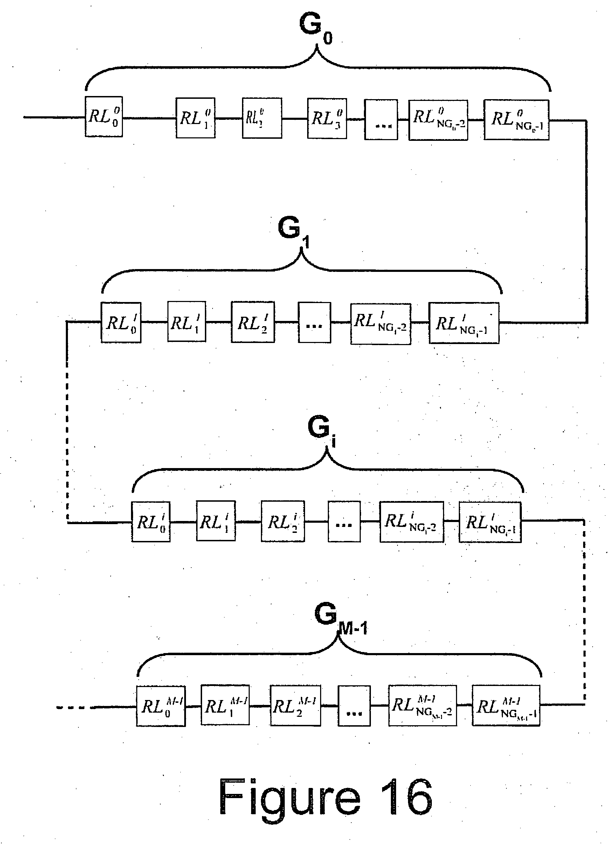

Figure 16 shows a diagram illustrating the arrangement of the transformation substations into groups in order to explain the automatic protection and sectionalizing system of the invention;

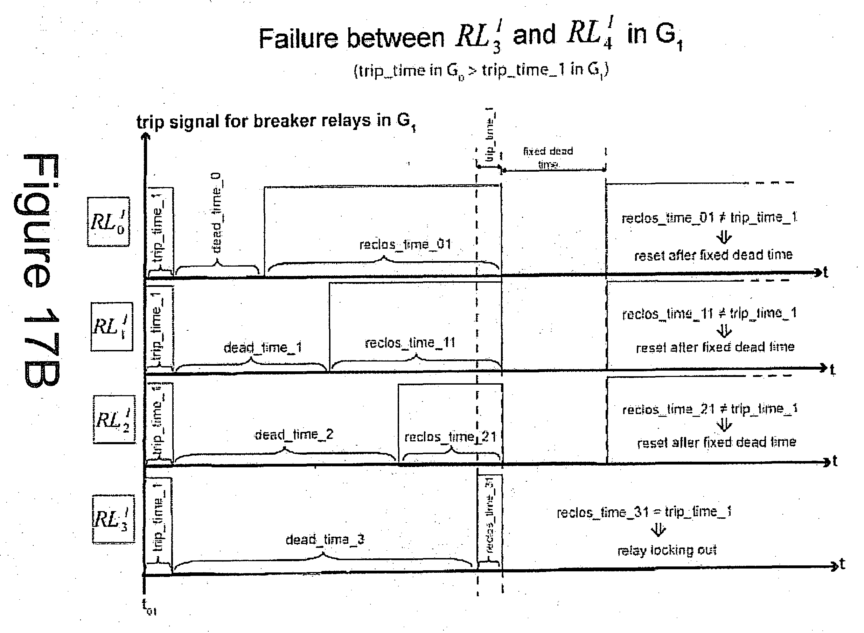

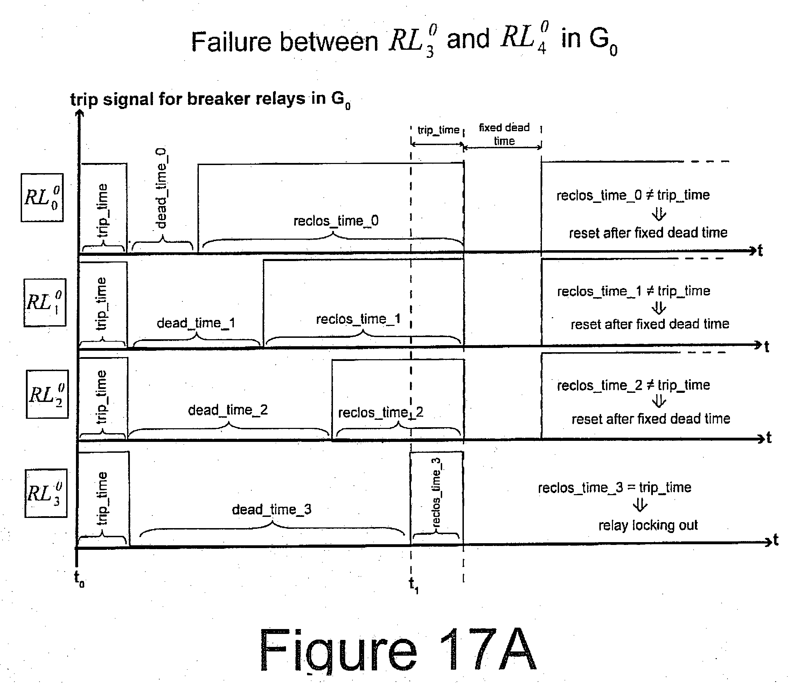

Figures 17A and 17B show time diagrams for illustrating the operation of the automatic protection and sectionalizing system after an overcurrent failure, $I_>$, $I_{>>}$, in accordance with the present invention; and

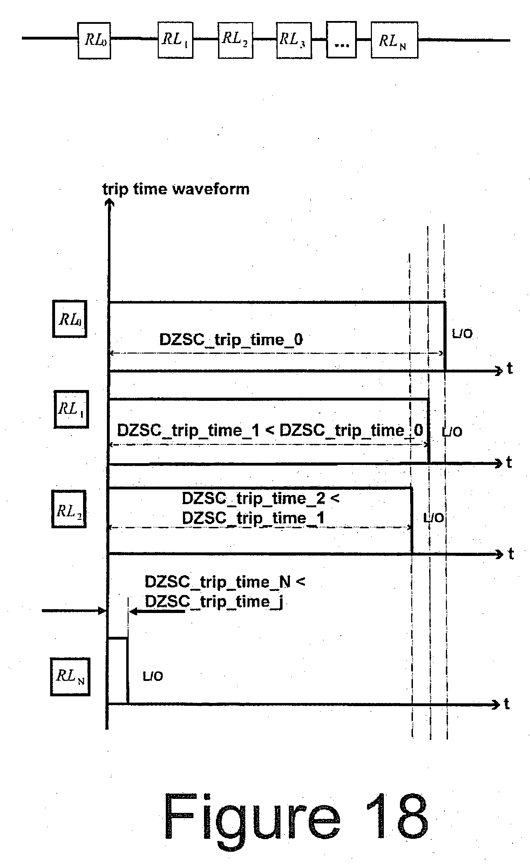

Figure 18 shows time diagrams for illustrating the operation of the automatic protection and sectionalizing system of the present invention after a directional zero sequence current failure $I_0$.

## DETAILED DESCRIPTION OF THE INVENTION AND PREFERRED EMBODIMENTS

In the following a detailed description of the invention will be provided in relation to preferred embodiments thereof.

Figure 4A shows the single line diagram of a transformation substation according to a first embodiment of the present invention. The transformation substation comprises a, the breaker 6 connected in parallel with the switchgear supplying power to the distribution transformer 4, namely the three-position (a-OFF-b) load break switch 2 and in series with the distribution line, namely between three-phase input and output terminals 20 and 20'.

As a result, the main power flow (maximum 400A to 630A) of the distribution line is channeled only through the breaker 6 whereas the distribution transformer load current (usually 5A to 20A) flows only through the three position (a-OFF-b) load break switch 2, as a consequence a significant reduction of the duty cycle requirements and the cost of this switch 2. The switches 3 and 3' are simple disconnecting and grounding switches. The grounding switch 7" is required only if there is a significant length of cable connecting the transformer with the switchgear to ground the capacitive charge of this piece of cable required in case of maintenance work:

The breaker 6 is connected in series with the main breaker of the distribution line located in the HV/MV power substation thus providing an additional automatic protection and line sectionalization device in the distribution line having both breakers in close coordination with each other. The current sensors monitoring the connection between the transformer and the switchgear will provide their input to the breaker microprocessor-based relay and in case of a failure the damaged transformer will be disconnected and isolated by positioning automatically, through the interlocking mechanism, the three position (a-OFF-b) switch 2 in the position OFF, with or without the opening of the breaker 6 contacts depending of the type and size of the fault.

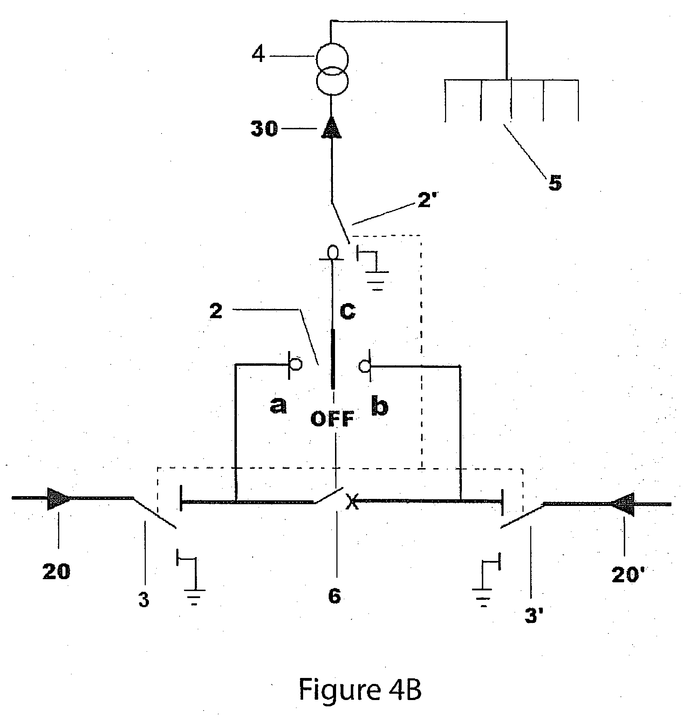

Figure 4B shows a transformation substation according to another embodiment of the present invention. It is similar to the transformation substation of Figure 4A, except that an additional three-position load break and grounding switch 2' is installed between the transformer and the three-position (a-OFF-b), load break and grounding switch 2. This is an extra feature required by some utilities for safety reasons when performing maintenance work.

In case of the use of a vacuum breaker, fulfillment of the requirement by some electrical utilities of establishing additional disconnection in series with the vacuum bottles of the vacuum breaker needs to be accomplished. For this purpose the additional function of the disconnection of the vacuum breaker is required, which creates a challenge in meeting the internal arc test requirements specifically if, instead of using SF6 or air, the utilization of mineral or silicone oil or esters as dielectric is applied.

Transformation substation according to yet another embodiment of the present invention it is shows a similar to the transformation substation of Figure 4A, except that the grounding switches 3 and 3' are eliminated and their disconnecting function is performed by a withdrawable breaker 6' and two additional simple grounding switches 7 and 7' added between the three-position, load break and grounding switch 2 and respective terminals of the breaker 6'.

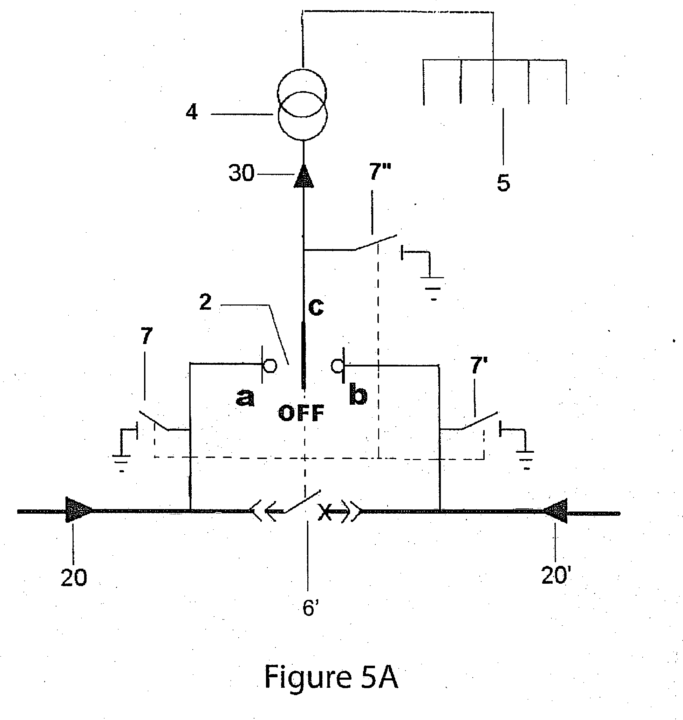

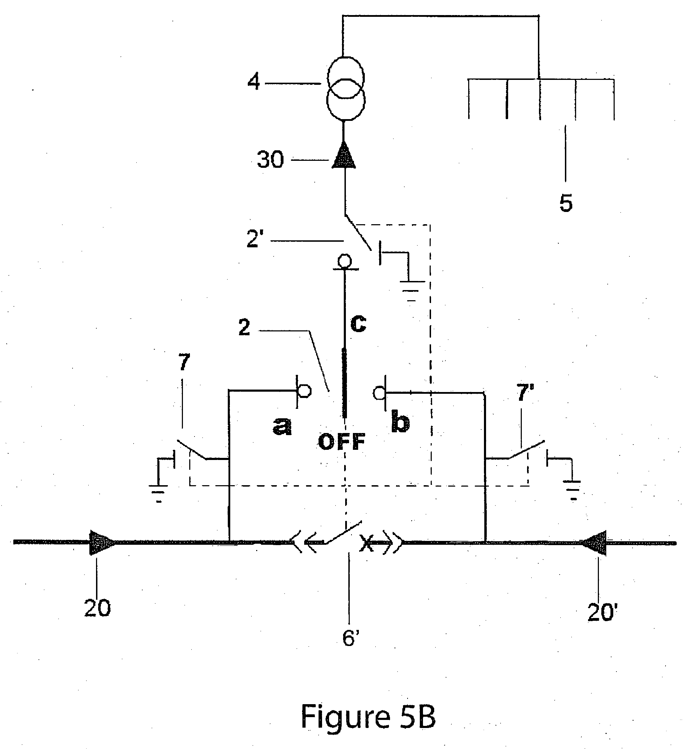

Figure 5B shows yet another embodiment of the transformation substation of the present invention which is a variant of the one illustrated in Figure 5A. In this case, a three-position, load break and grounding switch 2' is substituted for the grounding switch 7", maintaining the grounding function as well as adding a load breaking capability for the transformer load current connection line.

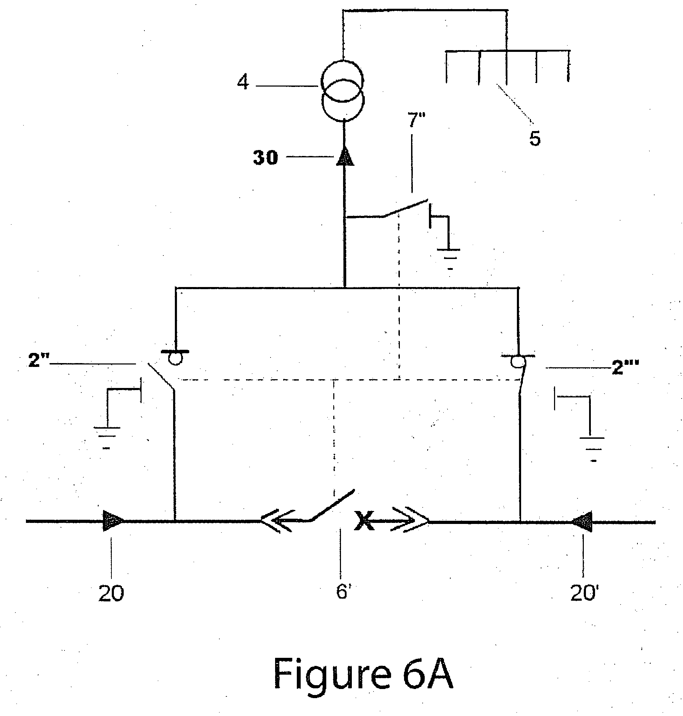

In the embodiment of Figure 6A, the three-position (a-OFF-b), load break, and grounding switch 2 and the two grounding switches 7 and 7' of the embodiment of figure 5B have been replaced by two three-position, load break and grounding switches 2" and 2"'.

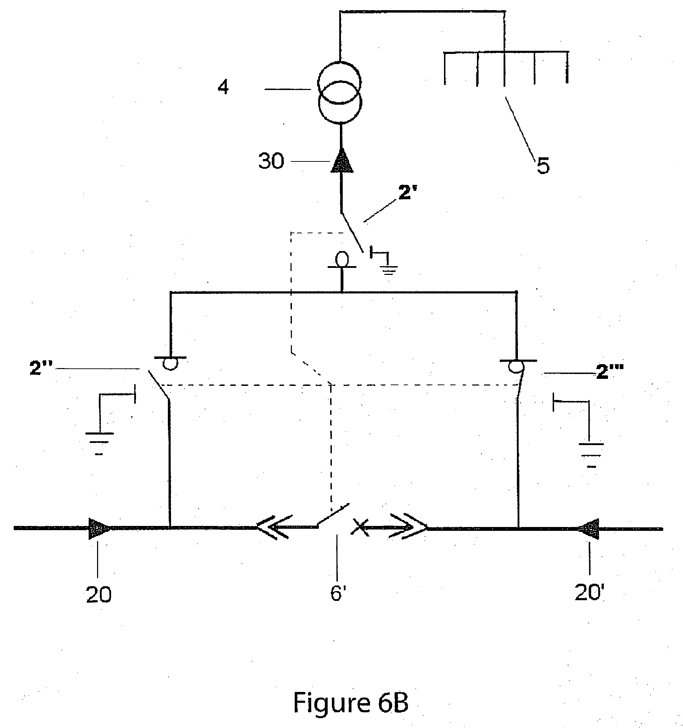

Figure 6B represents a variation of the embodiment of Figure 6A with a three-position, load break and grounding switch 2' being substituted for the grounding switch 7".

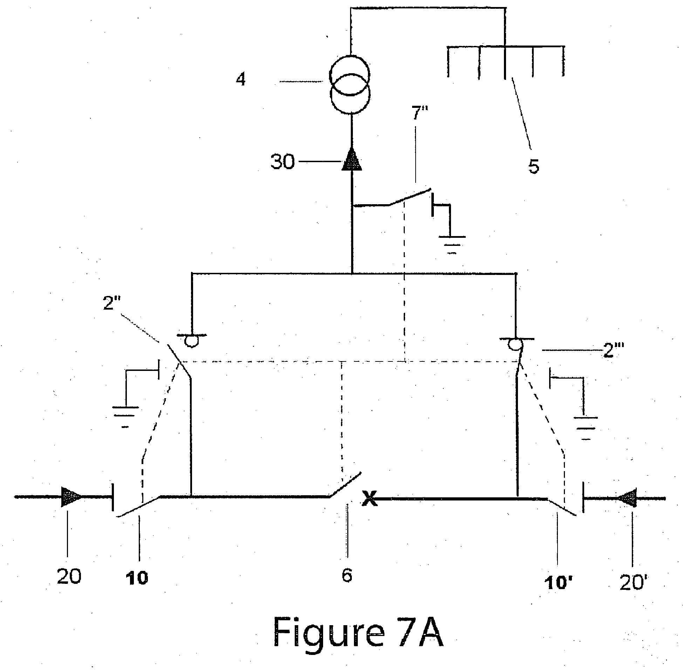

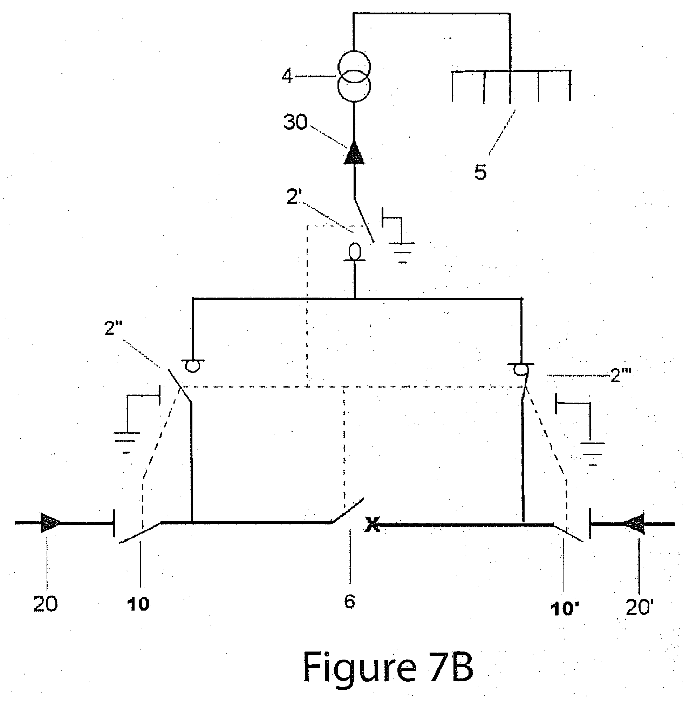

Figure 7A is another variation on the diagram of Figure 6A where the disconnect capability provided by the withdrawable breaker 6' is achieved, instead, through a non-withdrawable breaker 6 and two disconnecting switches 10 and 10' connected to respective terminals of the breaker 6 in series with the medium voltage line. Similarly to Figures 6A and 6B, in Figure 7B the grounding switch 7" of Figure 7A is replaced by a three-position, load break and grounding switch 2'.

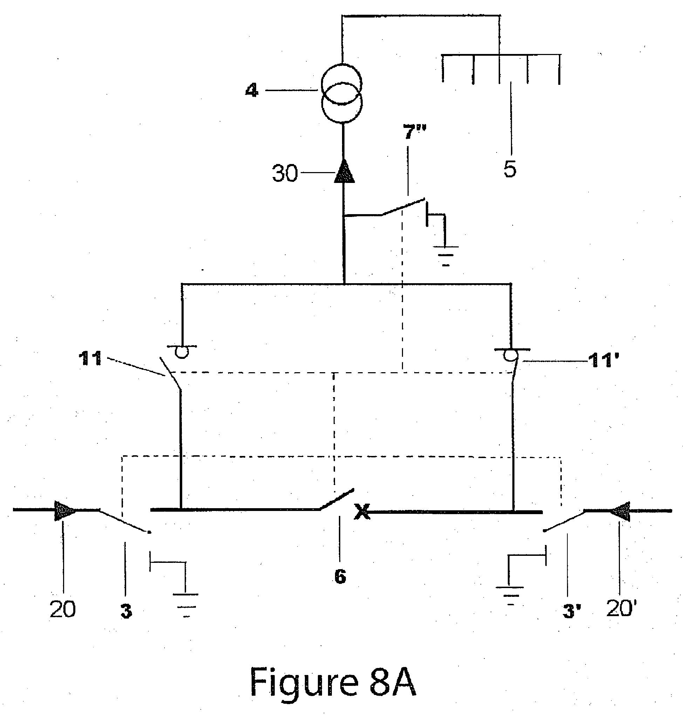

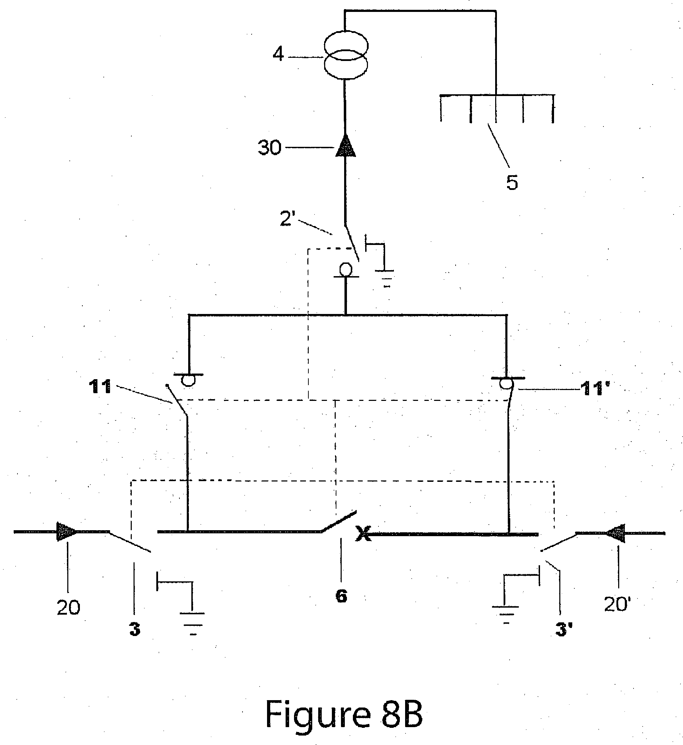

Figure 8A shows a single line diagram of another embodiment similar to that in Figure 7A but with the two three-position, load break and grounding switch 2" and 2"' being replaced by respective two position load break switches 11 and 11', and the disconnecting switches 10 and 10' replaced respectively by disconnecting and grounding switches 3 and 3'. The difference of Figure 8B from Figure 8A is the use of a three-position, load break and grounding switch 2' instead of the grounding switch 7".

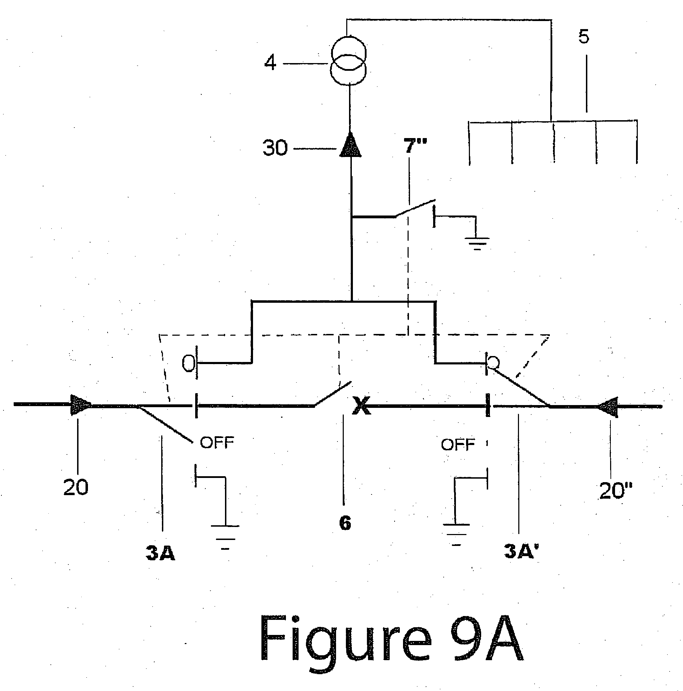

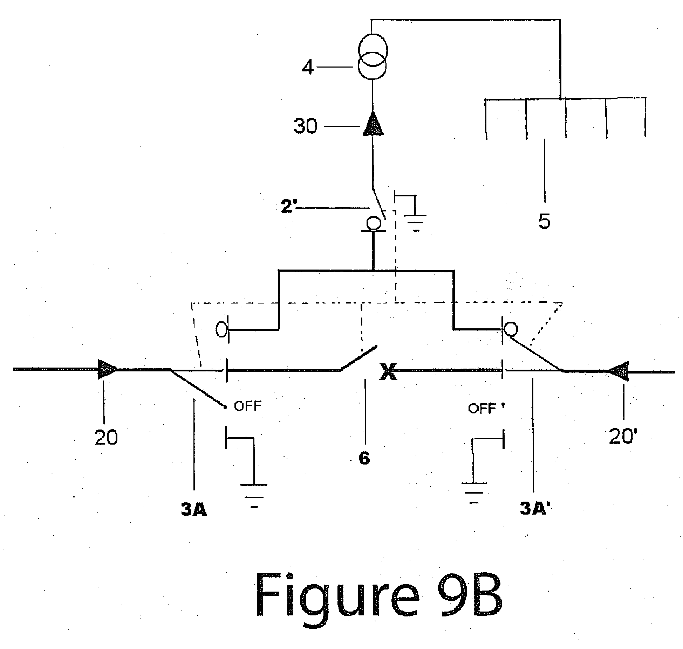

Regarding Figures 9A and 9B a type of switch 3A, 3A' different from those used in previous figures is introduced which takes the role both of a disconnecting grounding switch and a load break switch. These are the V-blade-type, three-position, disconnect, grounding and load break switches 3A, 3A' which are connected to the terminals 30 of the distribution transformer 4 and to the respective bushings of the breaker 6 as shown in the Figures 9A and 9B. As in previous sets of figures, the difference between Figure 9A and Figure 9B is the three-position, load break and grounding switch 2' replacing the grounding switch 7".

As will be appreciated by a person skilled in the art after reading the above description related to different embodiments of the switchgear and breaker 6, 6' interconnections, the essence of the invention is the connection of the breaker 6, 6' in parallel with at least part of that switchgear supplying the transformer with current and in series with the main line of the distribution network conducting the main distribution line load current (400A-630 A). As widely illustrated in the disclosed embodiments, the switchgear can take any configuration suitable for the transformer load current (5A-60A) supply and its protection as is required and known by those skilled in the art, the configuration being included within the scope of the invention as long as the breaker 6, 6' maintains the above connection and all other switches are required to interrupt only the transformer load current.

Figure 10 shows a classical loop arrangement of interconnected transformation substations and one of the breakers approximately in the middle of the loop in the open position (N.O.) and Figure 11 shows a classical T-off branch (Y) of a medium voltage distribution line using the transformation substations of the present invention.

Since the transformation substation according to the present invention provides both distribution transformer 4 and line protection and additional automatic sectionalizing capability for the medium voltage distribution line, it will be readily apparent that the transformation substations are directly applicable to any existing medium voltage distribution line/network configuration or arrangement.

Figure 12A illustrates an arrangement of compartments or containers G, G', G", in a transformation substation according to the invention. The container G holds the transformation substation switchgear 2, 2', 2", 2"', 3, 3', 3A, 3A', 7, 7', 7", 10, 10', 11, 11', the breaker 6 and an oxygen-free dielectric fluid (A). It can also be seen that the container G is located on the top of a sub-container G' and communicates with G through one or more pressure relief valves B located at the bottom of container G, adapted to satisfy the usual internal arc test requirements. Thus, the relief valves B, with a diameter of for example 10-25 cm although other sizes are possible, operate upon initiation of an arc to facilitate the instant removal of the dielectric fluid A from the path of the arc and release the pressure, gasses and the dielectric fluid A into sub-container G'. Further the pressure relief valve(s) B' which will operate immediately (in cascade) after operation of valves(s) B will release the gasses and the dielectric fluid A to a second sub-container G" in a shape of a labyrinth, through a further pressure vent or vents B".

Both containers G' and G" can be filled with either an oxygen- free gas or air depending of the kiloamperes and duration of the internal arc test requirements defined by the end user of the transformation substation. Optionally they also can hold a heat absorption material to reduce the gas temperature below the self-igniting point by the time the gases will be in contact with oxygen. Container G" has a labyrinth-like passage forcing the gases to zigzag on their way to the top where an optional final pressure valve(s) B" is located and which releases the gasses to the atmosphere.

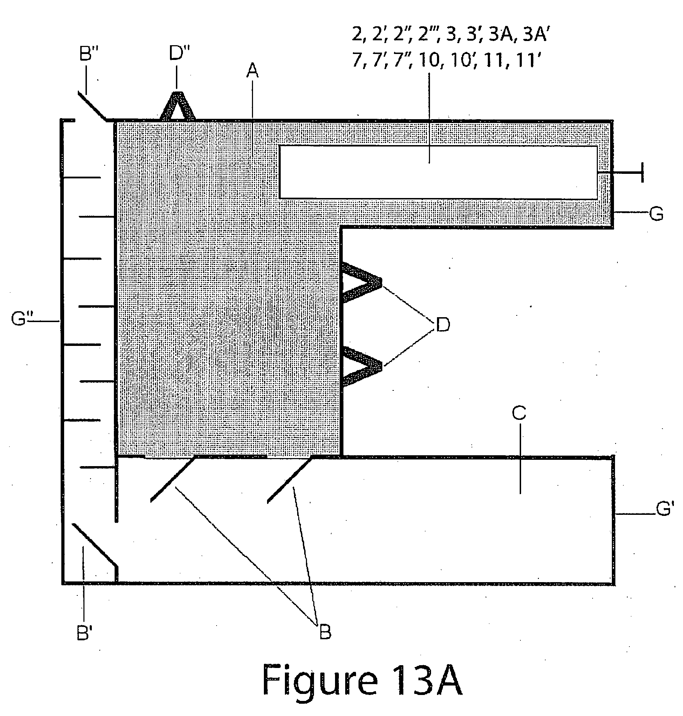

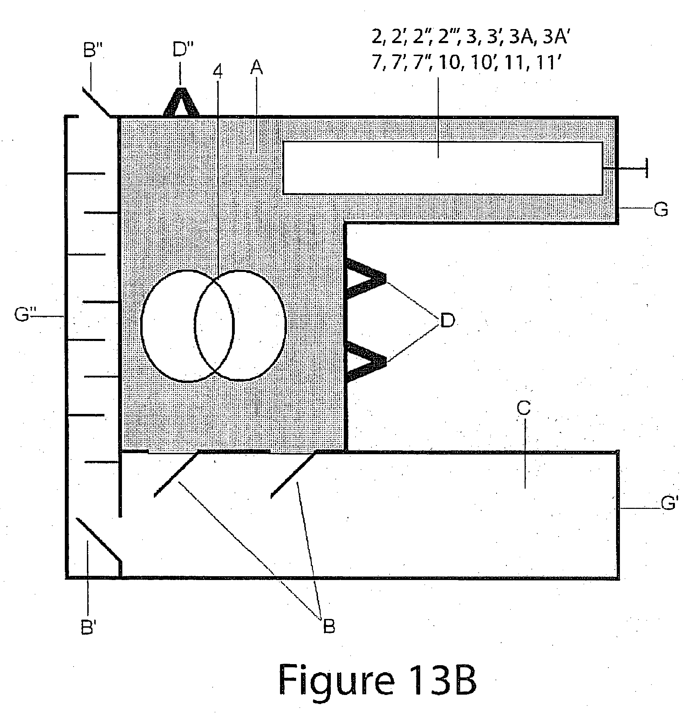

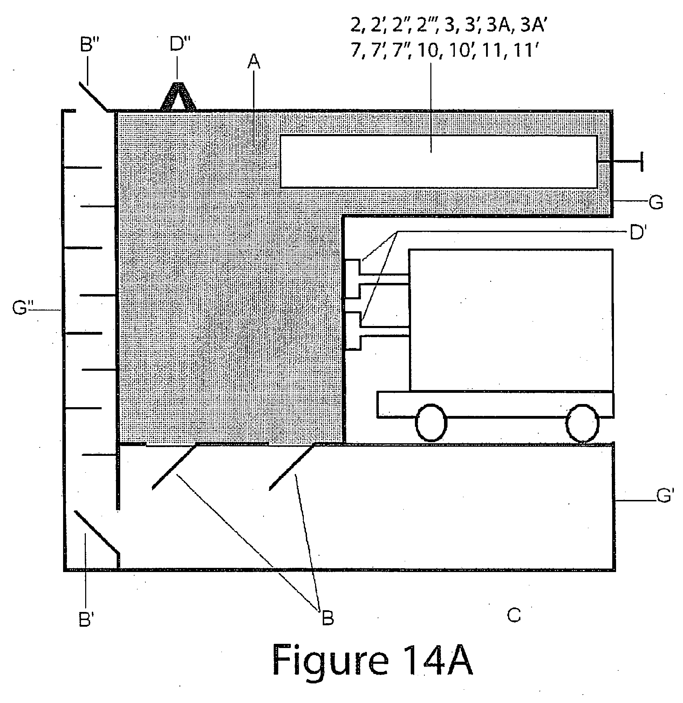

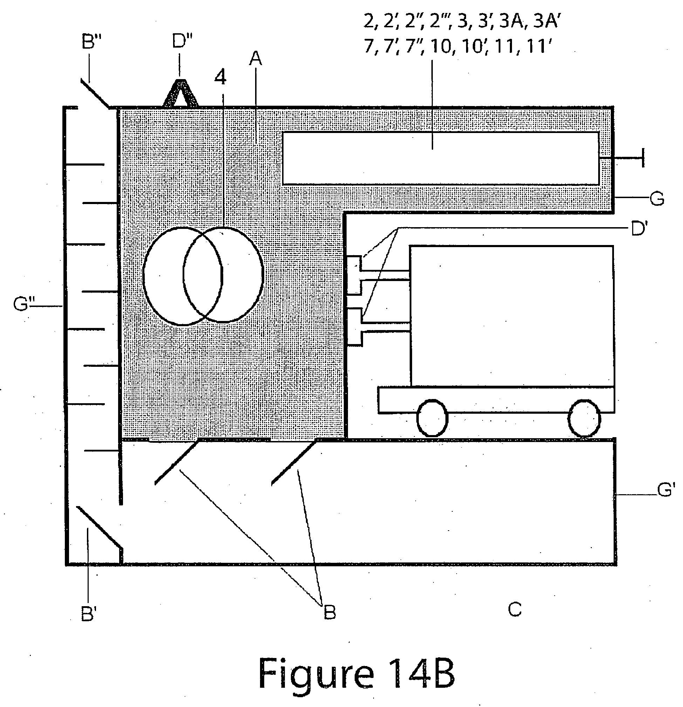

Figures 13A, 14A, and 15A show variants of Figure 12A but with the breaker 6 located outside the container G and connected with the switchgear located inside the container G, in Figure 13A via regular cable plug-in connectors D and in Figure 14A via the withdrawable breaker plug-in bushings D' and similarly in Figure 15A with the difference of using a breaker with the double set of bushings, namely one set of the regular breaker plug-in bushings on the side to be connected to the switchgear located inside the container and on the opposite side a cable plug-in type bushing D for the connection with the distribution line cable terminals 20 and 20'.

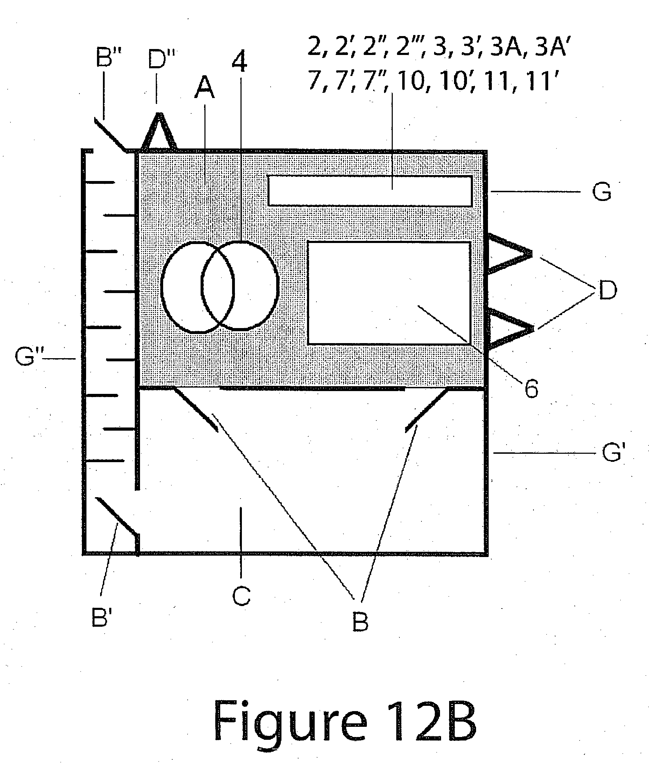

Variants of Figures 12A, 13A, 14A and 15A are respectively shown in Figures 12B, 13B, 14B and 15B with the same arrangement of containers G, G', G", valves, vents B, B', B" and dielectrics A, C but with the distribution transformer 4 included in container G.

Figure 16 shows an example schematic for illustrating the setup of the system of the present invention including the above disclosed transformation substations for an electrical fault generating at least one of the overcurrents $I_>$ and $I_{>>}$. Generally, a loop or medium voltage distribution line where the system is applied consists of N transformation substations plus one power substation. These N distribution substations may comprises any of the substations of the embodiment above or may comprise of a conventional substation as shown in Figure 3, or a combination of any one of these types of the distribution substations.

The setup for the system when an overcurrent electrical fault occurs comprises grouping of N+ 1 breaker with their relays $RL_l^i$ corresponding to the respective N+1 power and transformation substations. The N+1 breaker relays $RL_l^i$ are grouped in to M groups Go ... $G_i$ ... $G_{M-1}$ of a respective number of $NG_0$, $NG_1$, ... $NG_i$, ... $NG_{M-1}$ consecutive relays; the relays in each group $G_i$ being designated also respectively $RL_0^i$, $RL_1^i$, ..., $RL_l^i$, ... , $RL_{NG_i-1}^i$, starting from and including the power substation breaker relay. As can be seen from the above, the i in $RL_l^i$ indicates the group $G_i$ to which the relay $RL_l^i$ belongs while the subscript I indicates the position of the relay, from 0 to $NG_i$-1, in a given group $G_i$.

In Figure 17A, time diagrams of the trip signals for relays $RL_0^0$ to $RL_3^0$ are shown when an overcurrent electrical fault appears between relay $RL_3^0$ and $RL_4^0$ in group Go (that is, between the third and the fourth transformation substation in group Go starting from the power substation which contains the relay $RL_0^0$). The fault occurs at time to with the consequent tripping of the four first breakers operated by respective relays $RL_0^0$, $RL_1^0$, $RL_2^0$, $RL_3^0$.

Similarly, time diagrams of the trip signals for relays $RL_0^1$ to $RL_3^1$ in group $G_1$ are shown in Figure 17b when an overcurrent electrical fault appears between relay $RL_3^1$ and $RL_4^1$. As can be seen in the time diagrams in Figures 17a and 17b, the trip time, trip_time and trip_time_1 respectively, is the same for every breaker relay $RL_l^i$ in a given group $G_i$, whereas the trip time for all the relays in $G_0$, trip_time, is greater than the trip time for all the relays in $G_1$, trip_time_1, i.e a trip time interval equal to $t_{trip\_G0}$ - i * $\Delta_{OVtrip}$, said $t_{trip\_G0}$ being the trip time for all the breaker relays $RL_l^0$ in the group $G_0$, said value of i being the subscript of the group $G_i$ to which said each breaker relay $RL_l^i$ belongs, and said $\Delta_{OVtrip}$ being a time increment, said $t_{trip\_G0}$ and $\Delta_{OVtrip}$ being predetermined and a dead time interval - opened breaker contacts - after the first breaker tripping equal to $t_d$ * (I + 1), said $t_d$ being the dead time interval of the first breaker relay $RL_0^i$ of each group $G_i$ and being predetermined, and said value of I being the subscript of the breaker relay $RL_l^i$, in each respective group $G_i$. The difference between these group-specific trip times can be predetermined, for example set by the operator(s) in charge of the system or by an automatic device programmed according to the operating conditions.

Once the overcurrent electrical fault occurs between $RL_3^0$ and $RL_4^0$, all four relays $RL_0^0$, $RL_1^0$, $RL_2^0$,

$RL_3^0$ will trip their respective breakers after a time interval trip_time. By making the dead time of every breaker relay, dead_time_0, dead_time_1, dead_time_2, dead_time_3 respectively, longer as the respective breaker relay is closer to the overcurrent failure point, a sequential closing of the breakers is achieved as shown in Figure 17a. It can be seen that for the relay which is closest to the failure point (here $RL_3^0$) the trip time (trip_time) is substantially equal to its reclosing time (reclos_time_3) at the second trip operation ($t_1$). A condition can be programmed in the relay microprocessors that when the reclosing time of a given relay equals substantially the trip time thereof, the corresponding breaker 6 locks out providing for an automatic sectionalization and reconfiguration of the medium voltage distribution network or loop. An other method is the pre-programmed timer of each relay which is triggered by the first trip operation and triggers the lock-out of the breaker if the breaker is open at the end of the timers programmed time, The term "substantially" means here that the trip and reclosing times can be different considering the tolerances specified for every device and their response times, which will be easily taken into account by a person skilled in the art. Similarly, the programming of the above mentioned grouping and sequential operation is normal practice in the field of the medium voltage distribution networks provided with microprocessor-based breaker relays.

Regarding Figure 17b, a similar operation of the relays as that shown in Figure 17a can be seen but with a trip time trip_time_1 for $G_1$ less than the trip time trip_time for $G_0$. Here, an overcurrent electrical fault occurring between $RL_3^1$ and $RL_4^1$ at time $t_{01}$ is illustrated, i.e each $RL_j$ is arranged to have a trip time equal to $A_{I0trip}$ * (N - j + 1), wherein j is the subscript of the breaker relay $RL_j$ in question, and $\Delta_{I0trip}$ is the tripping time of the breaker relay $RL_N$ and predetermined. A similar reasoning as that used for the above Figure 17a can be applied herein.

Figure 18 shows an example schematic for illustrating the setup of the system of the present invention including the above disclosed transformation substations for an electrical fault generating a directional zero sequence current $I_0$. The figure also shows the time diagrams for all the relays $RL_0$, ..., $RL_j$, ..., $RL_N$ interconnected in the line through the respective transformation substations. In this case, the N+1 relays are considered as $RL_0$, ..., $RL_j$, ..., $RL_N$ without a grouping thereof being necessary. The trip time for every relay $RL_j$ connected in the line will be DZSC_trip_time_i, such that DZSC_trip_time_i > DZSC_trip_time_(i+1) as shown in the figure. One formula readily programmable in the usual processing means included in a breaker relay would be provided by $\Delta_{I0trip}$ * (N - j + 1), with $A_{I0trip}$ being the trip time for the relay $RL_N$, and j being the position or subscript of the corresponding relay $RL_j$ as disclosed in the accompanying specific claim. Of course, any other formula or algorithm or sequence can be programmed or input in the corresponding processing means of the relative breaker relay providing the operating conditions as specified in the corresponding claim. As can be seen, the essence of this aspect of the invention is the decreasing trip time of the breaker relay as the distance of the respective relay to the power substation increases.

Although embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

## Claims

1. A transformation substation, transforming electrical energy from a medium voltage to a low voltage, connected in series in an electrical medium voltage three phase distribution line between three-phase input terminals (20, 20') and three-phase output terminals (20', 20) of said distribution line, said transformation substation comprising:

   at least one distribution transformer (4) comprising three-phase medium voltage terminals (30) for transforming electrical energy from a medium voltage to a low voltage;
   at least one low voltage distribution panel (5) for distributing said transformed electrical energy;
   a medium voltage switchgear connected electrically to said three-phase medium voltage terminals. (30) of said at least one distribution transformer (4) and to said three-phase input terminals (20, 20') and said three-phase output terminals (20', 20) of said medium voltage distribution line, for supplying electrical energy and protection to said at least one distribution transformer (4),
   **characterized in that** said transformation substation further comprises a medium voltage breaker (6) electrically connected in parallel across the terminals of at least part of said medium voltage switchgear, and said breaker (6) is also electrically connected in series with said medium voltage electrical distribution line between said three-phase input terminals (20, 20') and said three-phase output terminals (20', 20) of said distribution line, wherein said medium voltage breaker (6) is interlocked with said medium voltage switchgear manually and/or electrically and/or automatically.

2. A transformation substation according to claim 1, **characterized in that** said at least part of said medium voltage switchgear comprises:

a three-position (a-OFF-b), load break switch (2), said three-position (a-OFF-b), load break switch (2) comprising a set of three movable contacts (c) electrically connected to said three-phase medium voltage terminals (30) of said at least one distribution transformer (4), a first set of three stationary contacts (a) connected to a first set of three bushings of said breaker (6) and a second set of three stationary contacts (b) electrically connected to a second set of three bushings of said breaker (6).

3. A transformation substation according to claim 2, **characterized in that** said medium voltage switchgear further comprises:

a first three-position off-load disconnecting and grounding switch (3), said first three-position off-load disconnecting and grounding switch (3) having a first set of three stationary contacts connected to said first set of three stationary contacts (a) of said three-position (a-OFF-b), load break switch (2), a grounding set of three stationary contacts electrically connected to ground, and a set of three movable contacts electrically connected to said three-phase input terminals (20, 20') of said distribution line; and a second three-position off-load disconnecting and grounding switch (3'), said second three-position off-load disconnecting and grounding switch (3') having a first set of three stationary contacts connected to said second set of stationary contacts (a) of said three-position (a-OFF-b), load break switch (2), a grounding set of three stationary contacts electrically connected to ground, and a set of three movable contacts electrically connected to said three-phase output terminals (20', 20) of said distribution line.

4. A transformation substation according to claim 2, **characterized in that** said medium voltage switchgear further comprises:

two grounding switches (7, 7'), each of said two grounding switches (7, 7') respectively electrically connected to said two sets (a, b) of three stationary contacts of said three-position (a-OFF-b), load break switch (2).

5. A transformation substation according to claim 4, **characterized in that** said medium voltage switchgear further comprises:

a grounding switch (7"), said grounding switch (7") electrically connected to said set of three movable contacts (c) of said three-position (a-OFF-b), load break switch (2) which are electrically connected to said three-phase medium voltage terminals (30) of said at least one distribution transformer (4).

6. A transformation substation according to claim 4, **characterized in that** said medium voltage switchgear further comprises:

a further three-position, load break switch (2'), said further three-position, load break switch (2') being electrically connected between said three-phase medium voltage terminals (30) of said at least one distribution transformer (4) and said three-position (a-OFF-b), load break switch (2), said further three-position, load break switch (2') comprising a first set of three stationary contacts electrically connected to ground, a second set of three stationary contacts connected to said set of three movable contacts (c) of said three-position (a-OFF-b), load break switch (2), and a set of three movable contacts is electrically connected to said three-phase medium voltage terminals (30) of said at least one distribution transformer (4).

7. A transformation substation according to claim 1, **characterized in that** said at least part of said medium voltage switchgear comprises:

first and second three-position load break and grounding switches (2", 2''') electrically connected between said three-phase medium voltage terminals (30) of said at least one distribution transformer (4) and said medium voltage breaker (6'), such that a first set of stationary contacts of said first three-position load break and grounding switch (2") is electrically connected to said three-phase medium voltage terminals (30) of said at least one distribution transformer (4), a second set of stationary contacts of said first three-position load break and grounding switch (2") is electrically connected to ground and a movable set of three stationary contacts of said first three-position load break and grounding switch (2") is connected to a first set of three bushings of said breaker (6) which are directly electrically connected to said three-phase input terminals (20, 20') of said distribution line, a first set of three stationary contacts of said second three-position load break and grounding switch (2''') is electrically connected to said three-phase medium voltage terminals (30) of said at least one distribution transformer (4), a second set of three stationary contacts of said second three-position load break and grounding switch (2''') is electrically connected to ground and a movable set of three stationary contacts of said second three-position load break and grounding switch (2''') is connected to the second set of three bushings of said breaker (6) which are directly electrically connected to a said three-phase output terminals (20', 20) of said distribution line they are interlocked in such a way that when the one is in the open position (N.O.) the other is in the closed (N.C.) and vice-versa.

8. A transformation substation according to claim 7, **characterized in that** said at least part of said medium voltage switchgear further comprises:

a grounding switch (7") is electrically connected to said first set of three stationary contacts of said first and second three-position load break and grounding switches (2", 2'") which are electrically connected to said three-phase medium voltage terminals (30) of said at least one distribution transformer (4).

9. A transformation substation according to claim 7, **characterized in that** said at least part of said medium voltage switchgear further comprises:

a grounding switch (2'), said grounding switch (2') being electrically connected between the three-phase medium voltage terminals (30) of said at least one distribution transformer (4) and said first and second three-position load break and grounding switches (2", 2'"), such that one of the sets of stationary contacts of said grounding switch (2') is electrically connected to ground, another set of three stationary contacts of said grounding switch (2') is electrically connected to the respective first sets of stationary contacts of first and second three-position load break and grounding switches (2", 2'") which are respectively electrically connected to each other, and a set of three movable contacts of said grounding switch (2') are electrically connected to said three-phase medium voltage terminals (30) of said at least one distribution transformer (4).

10. A transformation substation according to claim 8 or 9, **characterized in that** said medium voltage switchgear further comprises:

two disconnecting switches (10, 10'), said two disconnecting switches (10, 10') being electrically connected such that a first set of three contacts of a first disconnecting switch (10) is electrically connected both to a first set of three bushings of said breaker (6) and to a set of three movable contacts of said first three-position load break and grounding switch (2"), and a second set of contacts said first disconnecting switch (10) is electrically connected to said three-phase input terminals (20, 20') of said distribution line, and a first set of three contacts of a second disconnecting switch (10') is electrically connected both to the second set of three bushings of said breaker (6) and to the set of three movable contacts of said second three-position load break and grounding switch (2'"), and a second set of contacts of said second disconnecting switch (10') is electrically connected to said three-phase output terminals (20', 20) of said distribution line.

11. A transformation substation according to claim 1, **characterized in that** said medium voltage switchgear comprises:

first and second two-position, load break switches (11, 11') electrically connected between said three-phase medium voltage terminals (30) of said at least one distribution transformer (4) and said medium voltage breaker (6), a first set of three stationary contacts of said first two-position load break switch (11) is electrically connected to said three-phase medium voltage terminals (30) of said at least one distribution transformer (4) and a second set of three movable contacts of said first two-position load break switch (11) is electrically connected to a first set of three bushings of said breaker (6), and a first set of three stationary contacts of said second two-position load break switch (11') is electrically connected to said three-phase medium voltage terminals (30) of said at least one distribution transformer (4) and the second set of three movable contacts of said second two-position load break switch (11') is electrically connected to the second set of three bushings of said breaker (6);

first and second three-position off-load disconnecting and grounding switches (3, 3') are electrically connected such that the grounding set of three stationary contacts of said first three-position off load disconnecting and grounding switch (3) is electrically connected to ground, the other set of three stationary contacts of said switch (3) is electrically connected both to the first set of three bushings of said breaker (6) and to the second set of three movable contacts of said first two-position load break switch (11) and a set of three movable contacts of said first three-position off load disconnecting and grounding switch (3) is connected to said three-phase input terminals (20, 20') of said distribution line and the grounding set of three stationary contacts of said second three-position off-load disconnecting and grounding switch (3') is electrically connected to ground, the other set of three stationary contacts of switch (3') is electrically connected both to the second set of three bushings of said breaker (6) and to a second set of three movable contacts of said second two-position, load break switch (11') and the set of three movable contacts of said second three-position off load disconnecting and grounding switch (3') is connected to said three-phase output terminals (20', 20) of said distribution line,

12. A transformation substation according to claim 11, **characterized in that** said medium voltage switchgear further comprises:

a grounding switch (7"), said grounding switch (7") electrically connected to said first set of three stationary contacts of said first and second two-position load break switches (11,11') which are electrically connected to said three-phase medium voltage terminals (30) of said at least one distribution transformer (4).

13. A transformation substation according to claim 11, **characterized in that** said medium voltage switchgear further comprises:

a three-position, load break and grounding switch (2'), said three-position, load break and grounding switch (2') being electrically connected between the distribution transformer (4) and the load break switches (11, 11'), such that a set of three stationary contacts of said three-position load switch (2') is electrically connected to ground, another set of three stationary contacts of said break and grounding switch (2') is electrically connected to the two respective sets of three stationary contacts of said first and second two-position load break switches (11, 11') which are respectively electrically connected to each other, and the set of three movable contacts of said three-position, load break and grounding switch (2') is electrically connected to said three-phase medium voltage terminals (30) of said at least one distribution transformer (4).

14. A transformation substation according to claim 1, **characterized in that** said medium voltage switchgear comprises:

a V-blade-type, three-position, disconnect, grounding and load break switch (3A) with its set of three movable contacts electrically connected to said three-phase input terminals (20, 20') of said distribution line, a first set of three stationary contacts with transformer current load braking capacity electrically connected to said set of three-phase medium voltage terminals (30) of said at least one distribution transformer (4), a second set of three stationary contacts electrically connected to a first set of three bushings of said breaker (6), and the grounding third set of three stationary contacts electrically connected to ground,

a further V-blade-type, three-position, disconnect, grounding and load break switch (3A') with its set of three movable contacts electrically connected to said set of three-phase output terminals (20', 20) of said distribution line, a first set of three stationary contacts with transformer current load braking capacity electrically connected to said set of three-phase medium voltage terminals (30) of said at least one distribution transformer (4), a second set of three stationary contacts electrically connected to a second set of bushings of the vacuum breaker (6), and the grounding third set of its stationary contacts electrically connected to ground.

15. A transformation substation according to claim 14, **characterized in that** said medium voltage switchgear further comprises:

a grounding switch (7") electrically connected to said set three-phase medium voltage terminals (30) of said at least one distribution transformer (4).

16. A transformation substation according to claim 14, **characterized in that** said medium voltage switchgear further comprises:

a load break and grounding switch (2'), said load break and grounding switch (2') being electrically connected between said three-phase medium voltage terminals (30) of said at least one distribution transformer (4) and said first and second V-blade-type, three-position, disconnect, grounding and load break switches (3A, 3A'), such that one set of three stationary contacts of said switch (2') is electrically connected to ground, another set of three stationary contacts of said switch (2') is electrically connected to the respective sets of stationary load-break blades of the V-blade-type, three-position, disconnect, grounding and load break switches (3A, 3A') which are respectively electrically connected to each other, and the set of three movable contacts of said switch (2') is connected to said three-phase medium voltage terminals (30) of said at least one distribution transformer (4).

17. A transformation substation according to any one of the preceding claims, **characterized in that in that** said medium voltage breaker (6) is a withdrawable medium voltage breaker (6'), the bushings of said withdrawable breaker (6') being directly electrically connected to said three-phase input terminals (20, 20') and said three-phase output terminals (20', 20) respectively of said distribution line.

18. A transformation substation according to any one of claims 2 to 17, **characterized in that** at least one of the switches (2, 2', 2", 2"', 7, 7', 7", 11, 11') of said medium voltage switchgear is of a medium voltage type.

19. A transformation substation according to any one of claims 2 to 18, **characterized in that** at least one the switches (2, 2', 2", 2"', 7, 7', 7", 11, 11') of said medium voltage switchgear is of a fault make type.

20. A transformation substation according to any one of claims 2 to 19, **characterized in that** switches (2, 2', 2", 2"', 3, 3', 3A, 3A', 7, 7', 7", 10, 10', 11, 11') of said medium voltage switchgear are according to the IEC standards.

21. A transformation substation according to any one of the preceding claims, **characterized in that** the dielectric used for said switches (2, 2', 2", 2"', 3, 3', 3A, 3A', 7, 7', 7", 10, 10', 11, 11') of said medium voltage switchgear and said breaker (6) is one of air, esters, mineral or silicone oil, solid dielectric and SF6, or a combination thereof.

22. A transformation substation according to any one of the preceding claims, **characterized in that** both said breaker (6) and said different switches (2, 2', 2", 2"', 3, 3', 3A, 3A', 7, 7', 7", 10, 10', 11, 11') of said medium voltage switchgear are located in the same container (G), with its corresponding dielectric, and said container (G) being connected, through at least one pressure vent (B) located close to or at the bottom of said container (G), to a sub-container (G').

23. A transformation substation according to claim 22, **characterized in that** at least one distribution transformer (4) is located inside said container (G).

24. A transformation substation according to any one of claims 22 and 23, **characterized in that** said container (G) is filled with an oxygen free dielectric fluid (A), and said sub-container (G') is filled with air or with an oxygen-free gas and optionally a heat absorption material (C).

25. A transformation substation according to claim 24 **characterized in that** said oxygen-free gas is nitrogen.

26. A transformation substation according to any one of claims 21 to 25, **characterized in that** said sub-container (G') is provided with at least one further vent (B') connecting sub-container (G') with a further sub-container (G"), each of said sub-containers and said further sub-container (G', G") being filled with either an oxygen-free gas or air, and optionally a heat absorption material (C), and said further sub-container (G") being constructed to create a cooling labyrinth from said at least one pressure vent (B') to at least one further pressure vent (B'), said pressure vents (B, B') operating in a cascading manner.

27. A transformation substation according to any one of claims 21 to 26, **characterized in that** the breaker (6) is located in its own enclosure, outside said container (G),is of the withdrawable type and is connected to a plurality switches (2, 2', 2", 2"', 3, 3', 7, 7', 7", 3A, 3A', 10, 10', 11, 11') of said medium voltage switch gear through a set of six feed-through breaker-bushings (D').

28. A transformation substation according to claim 27, **characterized in that** said container (G) is provided with a set of six bushings (D) for the connections with said three-phase input terminal (20, or 20') and said three-phase output terminal (20', 20) of said medium voltage distribution line, an additional similar set of three bushings (D) for the cable connections with said breaker (6) and a set of three bushings (D") for the connection with said three-phase medium voltage terminals (30) of said at least one distribution transformer (4)

29. A transformation substation according to any one of the preceding claims, **characterized by** comprising sensing and microprocessor based protecting devices and relevant communication, programming and coordination means adapted to operate said breaker (6) interlocked with relative switches (2, 2', 2", 2"', 3, 3', 7, 7', 7", 3A, 3A', 10, 10', 11, 11') of said medium voltage switchgear for automatically protecting and sectionalizing said distribution line in accordance with data collected and processed from said sensing and protecting devices and provide protection to said at least one distribution transformer.

30. A transformation substation according to claim 29, **characterized in that** said sensing and protecting devices comprise devices for sensing current, voltage, pressure, temperature, light, dielectric fluid level and the like and are located in at least one of the containers (G, G', G") and/or in said at least one distribution transformer (4) tank.

31. A transformation substation according to any one of the preceding claims, **characterized in that** the processing means of the breaker microprocessor based relay of the respective breaker (6) is arranged, upon occurrence of an overcurrent fault in the respective distribution transformer (4) to trigger the opening operation of said respective breaker (6) and subsequently to automatically operate, during the corresponding dead time interval and before the first and final reclosing operation of said breaker (6), the relevant interlocked switch(es) in the respective switchgear such that said distribution transformer (4) becomes electrically disconnected and isolated and/or upon occurrence of a zero sequence fault being lower in intensity than a specific value, defined by the line operator, to trigger the opening operation of the relevant switch(es) in the respective switchgear such that said distribution transformer (4) becomes electrically disconnected and isolated, without triggering any opening operation of the breaker due to the occurrence of a lower than a specific value zero sequence fault in the respective distribution transformer.

32. A system for protecting, automatically sectionalizing and reconfiguring a medium voltage distribution line against electrical faults, said medium voltage distribution line connected to a plurality of transformation substations according to any one of the preceding claims which is interconnected in series with a plurality of N breakers for automatic line sectionalisation and having respective overcurrent microprocessor-based relays and/or additional respective zero sequence current directional breaker relays with their corresponding sensing, timing and data processing means, wherein said electrical faults causes one of at least two overcurrents $I_>$, $I_{>>}$ and/or a directional zero sequence current $I_0$ **characterized in that**

- for an electrical fault generating any of said at least two overcurrents $I_>$, $I_{>>}$, the N breaker relays plus the power substation breaker relay, N+1 relays in total, are considered as grouped in M groups, $G_0$, $G_1$, ... , $G_i$, ... $G_{M-1}$, each of a respective number $NG_0$, $NG_1$, ... $NG_i$, ... $NG_{M-1}$ of consecutive relays, $RL_0^i$, $RL_1^i$, ..., ..., $RL_l^i$, ... , $RL_{NG_i-1}^i$ , starting from and including the power substation breaker relay, and the respective trip time intervals for all the respective breaker relays in a given group $G_i$ with a given value of i are arranged to have substantially the same value, and the trip time interval for any breaker relay in a group $G_i$ is arranged to be greater than the trip time interval for any breaker relay in a consecutive group $G_{i+1}$, the difference between trip time intervals of consecutive groups being predetermined;

the dead time interval for each relay $RL_l^i$ after the first breaker tripping is arranged to have substantially the same value for a given value of the subscript $l$, and to be less than the dead time interval for a consecutive relay $RL_{l+1}^i$ in the

same group $G_i$, and the dead time interval after the second breaker tripping and before the second reclosing operation is arranged to have the same value for all the breaker relays, the difference between dead time intervals of consecutive relays being predetermined;

wherein each breaker relay is configured for locking out its respective breaker after two trips provided that the corresponding reclosing time interval after the first breaker trip and the relevant group trip time show substantially the same value and/or the pre-programmed timer of each relay which is triggered by the first trip operation and triggers the lock-out of the breaker if the breaker is open at the end of the timers programmed time, considering specified tolerances, and the second dead time interval before the second reclosing operation being arranged to have substantially the same value for all the breaker relays;

- for an electrical fault generating a directional zero sequence current $I_0$, the N+1 breaker directional zero sequence relays are considered as $RL_0$, ..., $RL_j$, ..., $RL_N$, and the trip time for any relay $RL_j$ is arranged to have a value greater than the trip time for a consecutive relay $RL_{j+1}$, said difference between trip times of consecutive relays being predetermined, and said breaker relays being configured for locking out the respective breakers after one trip upon occurrence of said electrical fault generating a directional zero sequence current $I_0$.

33. A system for protecting, automatically sectionalizing and reconfiguring a medium voltage distribution line against electrical faults according to claim 32 **characterized in that**

- for said electrical fault generating any of said at least two overcurrents $I_>$, $I_{>>}$, each breaker relay $RL_l^i$ is arranged to have a trip time interval equal to $t_{trip}\_G_0 - i * \Delta_{OVtrip}$, said $t_{trip}\_G_0$ being the trip time for all the breaker relays $RL_l^0$ in the group $G_0$, said value of i being the subscript of the group $G_i$ to which said each breaker relay $RL_l^i$ belongs, and said $\Delta_{OVtrip}$ being a time increment, said $t_{trip\_G0}$ and $\Delta_{OVtrip}$ being predetermined; a dead time interval - opened breaker contacts - after the first breaker tripping equal to $t_d * (l + 1)$, said $t_d$ being the dead time interval of the first breaker relay $RL_0^i$ of each group $G_i$ and being predetermined, and said value of l being the subscript of the breaker relay $RL_l^i$, in each respec-

tive group $G_i$,

- for an electrical fault generating a directional zero sequence current $I_0$, each $RL_j$ is arranged to have a trip time equal to $\Delta_{I0trip}$ * (N - j + 1), wherein j is the subscript of the breaker relay $RL_j$ in question, and $\Delta_{I0trip}$ is the tripping time of the breaker relay $RL_N$ and predetermined.

34. A system for protecting, automatically sectionalizing and reconfiguring said medium voltage distribution line according to any one of claims 32 and 33, **characterized in that** the means used to program the required breaker relays with inputs such as defining M groups, $G_0$, $G_1$, ... , $G_i$, ... $G_{M-1}$, respective numbers $NG_0$, $NG_1$, ... $NG_i$ ... $NG_{M-1}$ of consecutive relays, $RL_0^i$ , $RL_1^i$ , ..., $RL_l^i$ , ... , $RL_{NG_i}^i$ , in each group $G_i$, etc..., the parameters, such as $t_{trip\_}G_0$, i, $\Delta_{OVtrip}$, etc..., the bidirectionability and sensor readings and the like are the timing and data processing means included in each one of the breaker relays.

35. A system for protecting, automatically sectionalizing and reconfiguring said medium voltage distribution line according to claim 34, **characterized in that** said breaker relays are microprocessor-based breaker relays and said timing and data processing means are the microprocessor(s) included in each respective microprocessor-based breaker relay.

**Patentansprüche**

1. Transformator-Unterwerk, welches elektrische Energie von einer mittleren Spannung auf eine niedrige Spannung umwandelt und welches in Serie in einer elektrischen Mittelspannungsdreiphasenverteilungsleitung zwischen dreiphasigen Eingangsklemmen (20, 20') und dreiphasigen Ausgangsklemmen (20', 20) der Verteilungsleitung geschaltet ist, wobei das Transformator-Unterwerk umfasst:

wenigstens einen Verteilungstransformator (4), welcher Mittelspannungsklemmen für drei Phasen (30) zum Umwandeln von elektrischem Strom von einer Mittelspannung zu einer Niederspannung umfasst;
wenigstens eine Niederspannungsverteilungstafel (5) zum Verteilen des umgewandelten elektrischen Stroms;
eine Niederspannungsschaltanlage, welche elektrisch mit den dreiphasigen Mittelspannungsklemmen (30) des wenigstens einen Verteilungstransformators (4) und mit den dreiphasigen Eingangsklemmen (20, 20') und den dreiphasigen Ausgangsklemmen (20', 20) der Mittelspannungsverteilungsleitung verbunden ist, um elektrischen Strom und Schutz für den wenigstens einen Verteilungstransformator (4) zu liefern,
**dadurch gekennzeichnet, dass** die Verteilungstransformatorunterstation des Weiteren einen Mittelspannungstrennschalter (6), welcher elektrisch parallel über die Klemmen wenigstens eines Teils der Mittelspannungsschaltausrüstung verbunden ist, und der Trennschalter (6) ebenfalls elektrisch in Reihe mit der Mittelspannungsverteilungsleitung zwischen den dreiphasigen Eingangsklemmen (20, 20') und den dreiphasigen Ausgangsklemmen (20', 20) der Verteilungsleitung geschaltet ist, wobei der Mittelspannungstrennschalter (6) mit der Mittelspannungsschaltausrüstung manuell und/oder elektrisch und/oder automatisch verriegelt wird.

2. Transformator-Unterwerk nach Anspruch 1, **dadurch gekennzeichnet, dass** der wenigstens eine Teil der Mittelspannungsschaltausrüstung umfasst:

einen Dreipositions(a-OFF-b)-Leistungsschalter (2), wobei der Dreipositions(a-OFF-b)-Leistungsschalter (2) einen Satz von drei bewegbaren Kontakten (c), welche elektrisch mit den dreiphasigen Mittelspannungsklemmen (30) des wenigstens einen Verteilungstransformators (4) verbunden sind, einen ersten Satz von drei stationären Kontakten (a), welche mit einem ersten Satz von drei Durchführungen des Trennschalters (6) verbunden sind, und einen zweiten Satz von drei stationären Kontakten (b), welche mit einem zweiten Satz von drei Durchführungen des Trennschalters (6) verbunden sind, umfasst.

3. Transformator-Unterwerk nach Anspruch 2, **dadurch gekennzeichnet, dass** die Mittelspannungsschaltausrüstung des Weiteren umfasst:

einen ersten lastfreien Drei-Positions-Trennungs- und Erdungsschalter (3), wobei der erste lastfreie Drei-Positions-Trennungs- und Erdungsschalter (3) einen ersten Satz von drei stationären Kontakten, welcher mit dem ersten Satz von drei stationären Kontakten (a) des Dreipositions(a-OFF-b)-Leistungsschalters (2) verbunden ist, einen Erdungssatz der drei stationären Kontakten, welcher elektrisch mit Masse verbunden ist, und einen Satz von drei bewegbaren Kontakten, welcher elektrisch mit den dreiphasigen Eingangsklemmen (20, 20') der Verteilungsleitung verbunden ist, aufweist; und einen zweiten lastfreien Drei-Positions-Trennungs- und Erdungsschalter (3'), wobei der zweite lastfreie Drei-Positions-Trennungs- und Erdungsschalter (3') einen ersten Satz von drei stationären Kontakten, welcher mit dem zweiten Satz von drei stationären Kontakten (a) des Dreipositions(a-OFF-b)-Leistungsschalters (2) verbunden ist, einen Erdungssatz der drei stationären Kontakte, welcher elektrisch mit Masse verbunden ist, und einen Satz von drei bewegbaren Kontakten, welcher elektrisch mit den dreiphasigen Ausgangsklemmen (20', 20) der Verteilungsleitung verbunden ist, aufweist

4.  Transformator-Unterwerk nach Anspruch 2, **dadurch gekennzeichnet, dass** die Mittelspannungsschaltausrüstung des Weiteren umfasst:

    zwei Erdungsschalter (7, 7'), wobei jeder der zwei Erdungsschalter (7, 7') jeweils elektrisch mit den zwei Sätzen (a, b) der drei stationären Kontakte des Dreipositions(a-OFF-b)-Leistungsschalters (2) verbunden ist.

5.  Transformator-Unterwerk nach Anspruch 4, **dadurch gekennzeichnet, dass** die Mittelspannungsschaltausrüstung des Weiteren umfasst:

    einen Erdungsschalter (7"), wobei der Erdungsschalter (7") elektrisch mit dem Satz von drei bewegbaren Kontakten (c) des Dreipositions(a-OFF-b)-Leistungsschalters (2) verbunden ist, welche elektrisch mit den dreiphasigen Mittelspannungsklemmen (30) des wenigstens einen Verteilungstransformators (4) verbunden sind.

6.  Transformator-Unterwerk nach Anspruch 4, **dadurch gekennzeichnet, dass** die Mittelspannungsschaltausrüstung des Weiteren umfasst:

    einen weiteren Drei-Positions-Leistungsschalter (2'), wobei der weitere Drei-Positions-Leistungsschalter (2') elektrisch zwischen die dreiphasigen Mittelspannungsklemmen (30) des wenigstens einen Verteilungstransformators (4) und den Dreipositions(a-OFF-b)-Leistungsschalter (2) geschaltet ist, wobei der weitere Dreipositions-Leistungsschalter (2') einen ersten Satz von drei stationären Kontakten, welcher elektrisch mit Masse verbunden ist, einen zweiten Satz von drei stationären Kontakten, welcher mit dem Satz bewegbarer Kontakte (c) des Dreipositions(a-OFF-b)-Leistungsschalters (2) verbunden ist, umfasst und ein Satz von drei bewegbaren Kontakten elektrisch mit den dreiphasigen Mittelspannungsklemmen (30) des wenigstens einen Verteilungstransformators (4) verbunden ist.

7.  Transformator-Unterwerk nach Anspruch 1, **dadurch gekennzeichnet, dass** die Mittelspannungsschaltausrüstung des Weiteren umfasst:

erste und zweite Drei-Positions-Leistungs- und Erdungsschalter (2", 2'''), welche elektrisch zwischen die dreiphasigen Mittelspannungsklemmen (30) des wenigstens einen Verteilungstransformators (4) und den Mittelspannungsleistungsschalter (6') geschaltet sind, so dass ein erster Satz von stationären Kontakten des ersten Drei-Positions-Leistungs- und Erdungsschalter (2") elektrisch mit den dreiphasigen Mittelspannungsklemmen (30) des wenigstens einen Verteilungstransformators (4) verbunden ist, ein zweiter Satz von stationären Kontakten des ersten Drei-Positions-Leistungs- und Erdungsschalter (2") elektrisch mit Masse verbunden ist und ein bewegbarer Satz von drei stationären Kontakten des ersten Drei-Positions-Leistungs- und Erdungsschalter (2") mit einem ersten Satz von drei Durchführungen des Trennschalters (6) verbunden ist, welche elektrisch direkt mit dreiphasigen Eingangsklemmen (20, 20') der Verteilungsleitung verbunden sind, wobei ein erster Satz von drei stationären Kontakten des zweiten Drei-Positions-Leistungs- und Erdungsschalters (2''') mit den dreiphasigen Mittelspannungsklemmen (30) des wenigstens einen Verteilungstransformators (4) verbunden ist, ein zweiter Satz von stationären Kontakten des zweiten Drei-Positions-Leistungs- und Erdungsschalters (2''') elektrisch mit Masse verbunden ist und ein bewegbarer Satz von drei stationären Kontakten des zweiten Drei-Positions-Leistungs- und Erdungsschalters (2''') mit einem zweiten Satz von drei Durchführungen des Trennschalters (6) verbunden ist, welche elektrisch direkt mit dreiphasigen Ausgangsklemmen (20', 20) der Verteilungsleitung verbunden sind, wobei sie auf solche Weise verriegelt sind, dass, wenn der eine sich in der offenen Position (N.O.) befindet, der andere sich in der geschlossenen (N.C.) befindet und umgekehrt.

8.  Transformator-Unterwerk nach Anspruch 7, **dadurch gekennzeichnet, dass** wenigstens ein Teil der Mittelspannungsschaltausrüstung des Weiteren umfasst:

    einen Erdungsschalter (7"), welcher elektrisch mit dem ersten Satz von drei stationären Kontakten des ersten und des zweiten Drei-Positions-Leistungs- und Erdungsschalters (2", 2''') verbunden ist, die elektrisch mit den dreiphasigen Mittelspannungsklemmen (30) des wenigstens einen Verteilungstransformators (4) verbunden sind.

9.  Transformator-Unterwerk nach Anspruch 7, **dadurch gekennzeichnet, dass** wenigstens ein Teil der Mittelspannungsschaltausrüstung des Weiteren umfasst:

einen Erdungsschalter (2'), wobei der Erdungsschalter (2') elektrisch zwischen die dreiphasigen Mittelspannungsklemmen (30) des wenigstens einen Verteilungstransformators (4) und den ersten und den zweiten Drei-Positions-Leistungs- und Erdungsschalter (2", 2"') geschaltet ist, so dass einer der Sätze stationärer Kontakte des Erdungsschalters (2') elektrisch mit Masse verbunden ist, ein weiterer Satz von drei stationären Kontakten des Erdungsschalters (2') elektrisch mit den jeweiligen ersten Sätzen stationärer Kontakte des ersten und des zweiten Drei-Positions-Leistungs- und Erdungsschalters (2", 2"') verbunden ist, welche jeweils elektrisch miteinander verbunden sind, und ein Satz von drei bewegbaren Kontakten des Erdungsschalters (2') elektrisch mit den dreiphasigen Mittelspannungsklemmen (30) des wenigstens einen Verteilungstransformators (4) verbunden ist.

10. Transformator-Unterwerk nach Anspruch 8 oder 9, **dadurch gekennzeichnet, dass** die Mittelspannungsschaltausrüstung des Weiteren umfasst:

zwei Unterbrechungsschalter (10, 10'), wobei die zwei Unterbrechungsschalter (10, 10') elektrisch so verbunden sind, dass ein erster Satz von drei Kontakten eines ersten Unterbrechungsschalters (10) elektrisch sowohl mit einem ersten Satz von drei Durchführungen des Trennschalters (6) als auch mit einem Satz von drei bewegbaren Kontakten des ersten Drei-Positions-Leistungs- und Erdungsschalters (2") verbunden ist und ein zweiter Satz von Kontakten des ersten Unterbrechungsschalters (10) elektrisch mit den dreiphasigen Eingangsklemmen (20, 20') der Verteilungsleitung verbunden ist und ein erster Satz von drei Kontakten eines zweiten Unterbrechungsschalters (10') elektrisch sowohl mit dem zweiten Satz von drei Durchführungen des Trennschalters (6) als auch mit dem Satz von drei bewegbaren Kontakten des zweiten Drei-Positions-Leistungs- und Erdungsschalters (2"') verbunden ist und ein zweiter Satz von Kontakten des zweiten Unterbrechungsschalters (10') elektrisch mit den dreiphasigen Ausgangsklemmen (20', 20) der Verteilungsleitung verbunden ist.

11. Transformator-Unterwerk nach Anspruch 1, **dadurch gekennzeichnet, dass** die Mittelspannungsschaltausrüstung des Weiteren umfasst:

erste und zweite Zwei-Positions-Leistungsschalter (11, 11'), welche elektrisch zwischen die dreiphasigen Mittelspannungsklemmen (30) des wenigstens einen Verteilungstransformators (4) und den Mittelspannungstrennschalter (6) geschaltet sind, wobei ein erster Satz von drei stationären Kontakten des ersten Zwei-Positions-Leistungsschalters (11) elektrisch mit den dreiphasigen Mittelspannungsklemmen (30) des wenigstens einen Verteilungstransformators (4) verbunden ist und ein zweiter Satz von drei bewegbaren Kontakten des ersten Zwei-Positions-Leistungsschalters (11) elektrisch mit einem ersten Satz von drei Durchführungen des Trennschalters (6) verbunden ist und ein erster Satz von drei stationären Kontakten des zweiten Zwei-Positions-Leistungsschalters (11') elektrisch mit den dreiphasigen Mittelspannungsklemmen (30) des wenigstens einen Verteilungstransformators (4) verbunden ist und ein zweiter Satz von drei bewegbaren Kontakten des zweiten Zwei-Positions-Leistungsschalters (11') elektrisch mit einem zweiten Satz von drei Durchführungen des Trennschalters (6) verbunden ist;
wobei erste und zweite lastfrei trennende und erdende Drei-Positionsschalter (3, 3') elektrisch so geschaltet sind, dass der Erdungssatz von drei stationären Kontakten des ersten lastfrei trennenden und erdenden Drei-Positionsschalters (3) elektrisch mit Masse verbunden ist, der andere Satz von drei stationären Kontakten des Schalter (3) elektrisch sowohl mit dem ersten Satz von drei Durchführungen des Trennschalters (6) als auch mit dem zweiten Satz von drei bewegbaren Kontakten des ersten Zwei-Positions-Leistungsschalters (11) verbunden ist und ein Satz von drei bewegbaren Kontakten des ersten lastfrei trennenden und erdenden Drei-Positions-Schalters (3) mit den dreiphasigen Eingangsklemmen (20, 20') der Verteilungsleitung verbunden ist und ein Erdungssatz von drei stationären Kontakten des zweiten lastfrei trennenden und erdenden Drei-Positionsschalters (3') elektrisch mit Masse verbunden ist, der andere Satz von drei stationären Kontakten des Schalter (3) elektrisch sowohl mit dem zweiten Satz von drei Durchführungen des Trennschalters (6) als auch mit dem zweiten Satz von drei bewegbaren Kontakten des zweiten Zwei-Positions-Leistungsschalters (11') verbunden ist, und der Satz von drei bewegbaren Kontakten des zweiten lastfrei trennenden und erdenden Drei-Positions-Schalters (3') mit den dreiphasigen Ausgangsklemmen (20', 20) der Verteilungsleitung verbunden ist.

12. Transformator-Unterwerk nach Anspruch 11, **dadurch gekennzeichnet, dass** die Mittelspannungsschaltausrüstung des Weiteren umfasst:

einen Erdungsschalter (7"), wobei der Erdungsschalter (7") elektrisch mit dem ersten Satz von drei stationären Kontakten der ersten und zweiten Zwei-Positions-Leistungsschalter (11, 11') geschaltet ist, die wiederum elektrisch mit den dreiphasigen Mittelspannungsklemmen (30) des wenigstens einen Verteilungstransformators (4) verbunden sind.

13. Transformator-Unterwerk nach Anspruch 11, **dadurch gekennzeichnet, dass** die Mittelspannungsschaltausrüstung des Weiteren umfasst:

einen Drei-Positions-Leistungs- und Erdungsschalter (2'), wobei der Drei-Positions-Leistungs- und Erdungsschalter (2') elektrisch zwischen dem Verteilungstransformator (4) und den Leistungsschaltern (11, 11') geschaltet ist, so dass ein Satz von drei stationären Kontakten des Drei-Positions-Leistungsschalters (2') elektrisch mit Masse verbunden ist, ein weiterer Satz von drei stationären Kontakten des Leistungs- und Erdungsschalters (2') elektrisch mit den zwei jeweiligen Sätzen von drei stationären Kontakten des ersten und des zweiten Zwei-Positions-Leistungsschalters (11, 11') verbunden ist, welche jeweils elektrisch miteinander verbunden sind, und ein Satz von drei bewegbaren Kontakten des Drei-Positions-Leistungs- und Erdungsschalters (2') elektrisch mit den dreiphasigen Mittelspannungsklemmen (30) des wenigstens einen Verteilungstransformators (4) verbunden ist.

14. Transformator-Unterwerk nach Anspruch 1, **dadurch gekennzeichnet, dass** die Mittelspannungsschaltausrüstung des Weiteren umfasst:

einen V-Klingen-Typ-, Drei-Positions-Trennungs-, Erdungs- und Leistungsschalter (3A) mit seinem Satz von drei bewegbaren Kontakten, welcher elektrisch mit den dreiphasigen Eingangsklemmen (20, 20') der Verteilungsleitung verbunden ist, mit einem ersten Satz von drei stationären Kontakten mit Transformatorstromlastschaltkapazität, welcher elektrisch mit dem Satz von dreiphasigen Mittelspannungsklemmen (30) des wenigstens einen Verteilungstransformators (4) verbunden ist, mit einem zweiten Satz von drei stationären Kontakten, welcher elektrisch mit einem ersten Satz von drei Durchführungen des Trennschalters (6) verbunden ist, und mit dem erdenden dritten Satz seiner stationären Kontakte, welcher elektrisch mit Masse verbindet, einen weiteren V-Klingen-Typ-, Drei-Positions-Trennungs-, Erdungs- und Leistungsschalter (3A') mit seinem Satz von drei bewegbaren Kontakten, welcher elektrisch mit dem Satz von dreiphasigen Ausgangsklemmen (20', 20) der Verteilungsleitung verbunden ist, mit einem ersten Satz von drei stationären Kontakten mit Transformatorstromlastschaltkapazität, welcher elektrisch mit dem Satz von dreiphasigen Mittelspannungsklemmen (30) des wenigstens einen Verteilungstransformators (4) verbunden ist, mit einem zweiten Satz von drei stationären Kontakten, welcher elektrisch mit einem zweiten Satz von Durchführungen des Vakuum-Trennschalters (6) verbunden ist, und mit dem erdenden dritten Satz seiner stationären Kontakte, welcher elektrisch mit Masse verbindet.

15. Transformator-Unterwerk nach Anspruch 14, **dadurch gekennzeichnet, dass** die Mittelspannungsschaltausrüstung des Weiteren umfasst:

einen Erdungsschalter (7"), welcher elektrisch mit dem Satz dreiphasiger Mittelspannungsklemmen (30) des wenigstens einen Verteilungstransformators (4) verbunden ist.

16. Transformator-Unterwerk nach Anspruch 14, **dadurch gekennzeichnet, dass** die Mittelspannungsschaltausrüstung des Weiteren umfasst:

einen Leistungs- und Erdungsschalter (2'), wobei der Leistungs- und Erdungsschalter (2') elektrisch zwischen den dreiphasigen Mittelspannungsklemmen (30) des wenigstens einen Verteilungstransformators (4) und den ersten und zweiten V-Klingen-Typ-, Drei-Positions-Trennungs-, Erdungs- und Leistungsschaltern (3A, 3A') geschaltet ist, so dass ein Satz von drei stationären Kontakten des Schalters (2') elektrisch mit Masse verbunden ist, ein weiterer Satz von drei stationären Kontakten des Schalters (2') elektrisch mit den jeweiligen Sätzen stationärer lastunterbrechender Klingen der V-Klingen-Typ, Drei-Positions-Trennungs-, Erdungs- und Leistungsschalter (3A, 3A') verbunden ist, die jeweils elektrisch miteinander verbunden sind, und der Satz von drei bewegbaren Kontakten des Schalters (2') mit den dreiphasigen Mittelspannungsklemmen (30) des wenigstens einen Verteilungstransformators (4) verbunden ist.

17. Transformator-Unterwerk nach einem beliebigen der vorangehenden Ansprüche, **dadurch gekennzeichnet, dass** der Mittelspannungtrennschalter (6) ein ausziehbarer Mittelspannungtrennschalter (6') ist, wobei die Durchführungen des ausziehbaren Trennschalters (6') direkt elektrisch mit den dreiphasigen Eingangsklemmen (20, 20') beziehungsweise den dreiphasigen Ausgangsklemmen (20', 20) der Verteilungsleitung verbunden sind.

18. Transformator-Unterwerk nach einem beliebigen der Ansprüche 2 bis 17, **dadurch gekennzeichnet, dass** wenigstens einer der Schalter (2, 2', 2'', 2''', 7, 7', 7'', 11, 11') der Mittelspannungsschaltausrüstung vom Mittelspannungstyp ist.

19. Transformator-Unterwerk nach einem beliebigen der Ansprüche 2 bis 18, **dadurch gekennzeichnet, dass** wenigstens einer der Schalter (2, 2', 2'', 2''', 7, 7', 7'', 11, 11') der Mittelspannungsschaltausrüstung vom Fehlerschutztyp ist.

20. Transformator-Unterwerk nach einem beliebigen der Ansprüche 2 bis 19, **dadurch gekennzeichnet, dass** Schalter (2, 2', 2'', 2''', 3, 3', 3A, 3A', 7, 7', 7'', 10, 10', 11, 11') der Mittelspannungsschaltausrüstung den IEC-Standards entsprechen.

21. Transformator-Unterwerk nach einem beliebigen der vorangehenden Ansprüche, **dadurch gekennzeichnet, dass** das Dielektrikum, welches für die Schalter (2, 2', 2'', 2''', 3, 3', 3A, 3A', 7, 7', 7'', 10, 10', 11, 11') der Mittelspannungsschaltausrüstung und den Trennschalter (6) eingesetzt wird, entweder Luft, Ester, Mineralöl oder Silikonöl, festes Dielektrikum oder SF6 oder eine Kombination davon ist.

22. Transformator-Unterwerk nach einem beliebigen der vorangehenden Ansprüche, **dadurch gekennzeichnet, dass** sowohl der Trennschalter (6) als auch die unterschiedlichen Schalter (2, 2', 2'', 2''', 3, 3', 3A, 3A', 7, 7', 7'', 10, 10', 11, 11') der Mittelspannungsschaltausrüstung im selben Container (G) mit seinem entsprechenden Dielektrikum angeordnet sind und der Container (G) durch wenigstens eine Druckausgleichsöffnung (B), welche nahe zum Boden oder beim Boden des Containers (G) angeordnet ist, mit einem Unter-Container (G') verbunden ist.

23. Transformator-Unterwerk nach Anspruch 22, **dadurch gekennzeichnet, dass** wenigstens ein Verteilungstransformator (4) im Container (G) angeordnet ist.

24. Transformator-Unterwerk nach einem beliebigen der Ansprüche 22 und 23, **dadurch gekennzeichnet, dass** der Container (G) mit einem sauerstofffreien dielektrischen Fluid (A) gefüllt ist und der Unter-Container (G') mit Luft oder mit einem sauerstofffreien Gas und wahlweise mit einem Wärme absorbierendem Material (C) gefüllt ist.

25. Transformator-Unterwerk nach Anspruch 24, **dadurch gekennzeichnet, dass** das sauerstofffreie Gas Stickstoff ist.

26. Transformator-Unterwerk nach einem beliebigen der Ansprüche 21 bis 25, **dadurch gekennzeichnet, dass** der Unter-Container (G') mit wenigstens einer weiteren Belüftungsöffnung (B') ausgestattet ist, welche den Unter-Container (G') mit einem weiteren Unter-Container (G'') verbindet, wobei jeder der Unter-Container und der weitere Unter-Container (G', G'') mit entweder einem sauerstofffreien Gas oder Luft befüllt ist und wahlweise mit Wärme absorbierendem Material (C) und wobei der weitere Unter-Container (G'') gestaltet ist, um ein Kühllabyrinth von der wenigstens einen Druckentlüftungsöffnung (B') zu wenigstens einer weiteren Druckentlüftungsöffnung (B') zu gestalten, wobei die Druckentlüftungsöffnungen (B, B') in einer kaskadierenden Weise arbeiten.

27. Transformator-Unterwerk nach einem beliebigen der Ansprüche 21 bis 26, **dadurch gekennzeichnet, dass** der Trennschalter (6) in seiner eigenen Ummantelung angeordnet ist, außerhalb des Containers (G), vom ausziehbaren Typ ist und mit einer Mehrzahl von Schaltern (2, 2', 2'', 2''', 3, 3', 7, 7', 7'', 3A, 3A', 10, 10', 11, 11') der Mittelspannungsschaltausrüstung durch einen Satz von sechs Trennschalterleitungsdurchführungen (D') verbunden ist.

28. Transformator-Unterwerk nach Anspruch 27, **dadurch gekennzeichnet, dass** der Container (G) mit einem Satz von sechs Durchführungen (D) für die Verbindungen der dreiphasigen Eingangsklemmen (20 oder 20') und der dreiphasigen Ausgangsklemmen (20', 20) der Mittelspannungsverteilungsleitung, mit einem zusätzlichen, ähnlichen Satz von drei Durchführungen (D) für die Kabelverbindungen der Trennschalter (6) und mit einem Satz von drei Durchführungen (D'') für die Verbindung mit den dreiphasigen Mittelspannungsklemmen (30) des wenigstens einen Verteilungstransformators (4) vorgesehen ist.

29. Transformator-Unterwerk nach einem beliebigen der vorangehenden Ansprüche, **gekennzeichnet durch** Umfassen von Sensorvorrichtungen und Mikroprozessor basierten Schutzvorrichtungen und relevanter Kommunikations- Programmier- und Koordinationsmittel, welche ausgelegt sind, um den Trennschalter (6), der mit in Bezug stehenden Schaltern (2, 2', 2'', 2''', 3, 3', 7, 7', 7'', 3A, 3A', 10, 10', 11, 11') der Mittelspannungsschaltausrüstung zum automatischen Schützen und Teilen in Abschnitte der Verteilungsleitung verriegelt ist, gemäß der Daten, welche von den Sensorvorrichtungen und den Schutzvorrichtungen gesammelt werden, zu betreiben und Schutz für den wenigstens einen Verteilungstransformator bereitzustellen.

30. Transformator-Unterwerk nach Anspruch 29, **da-**

**durch gekennzeichnet, dass** die Sensorvorrichtungen und Schutzvorrichtungen Vorrichtungen umfassen, um Strom, Spannung, Druck, Temperatur, Licht, Dieletrikumfluidniveaus und Ähnliches zu erfassen, und dass sie in wenigstens einem der Container (G, G', G") und/oder in dem wenigstens einen Verteilungstransformator(4)-Behälter angeordnet sind.

31. Transformator-Unterwerk nach einem beliebigen der vorangehenden Ansprüche, **dadurch gekennzeichnet, dass** das Verarbeitungsmittel des Mikroprozessor basierten Trennschalterrelais des jeweiligen Trennschalters (6) angeordnet ist, um bei Auftreten eines Überstromfehlers in dem jeweiligen Verteilungstransformator (4) die Öffnungshandlung des jeweiligen Trennschalters (6) auszulösen und um anschließend während des entsprechenden Totzeitintervalls und vor der ersten und endgültigen erneuten Schließhandlung des Trennschalters (6) den(die) relevanten verriegelten Schalter in der jeweiligen Schaltausrüstung automatisch zu betätigen, so dass der Verteilungstransformator (4) elektrisch getrennt und isoliert wird, und/oder um bei Auftreten eines Nullsystemfehlers, welcher niedriger in Intensität ausfällt als ein bestimmter Wert, der durch den Leitungsbetreiber definiert ist, die Öffnungshandlung des(der) relevanten Schalter(s) in der jeweiligen Schaltausrüstung auszulösen, so dass der Verteilungstransformator (4) elektrisch getrennt und isoliert wird, ohne Auslösen einer Öffnungshandlung des Trennschalters aufgrund des Auftretens eines Nullsystemfehlers mit einem Wert niedriger als ein bestimmter Wert in dem jeweiligen Verteilungstransformator.

32. System zum Schützen, zum automatischen in Abschnitte Teilen und zum erneuten Konfigurieren einer Mittelspannungsverteilung gegen elektrische Defekte, wobei die Mittelspannungsverteilungsleitung mit einer Mehrzahl von Transformator-Unterwerken nach einem beliebigen der vorangehenden Ansprüche verbunden ist, welche in Reihe mit einer Mehrzahl von N Trennschaltern zum automatischen Teilen der Leitung in Abschnitte verbunden ist und mit jeweils entsprechenden Mikroprozessor basierten Überstromrelais und/oder zusätzlich jeweiligen Nullsystemstromrichtungstrennschalterrelais mit ihren zugeordneten Sensor-, Zeitgeber- und Datenverarbeitungsmitteln aufweist, wobei die elektrischen Fehler einen von wenigstens zwei Überströmen $I_>$, $I_{>>}$ und/oder einen gerichteten Nullsystemstrom $I_0$ verursacht, **dadurch gekennzeichnet, dass**

- für einen elektrischen Fehler, welcher einen von wenigstens zwei Überströmen $I_>$, $I_{>>}$ verursacht, die N Trennschalterrelais plus das Stromunterstation-Trennschalterrelais, N+1 Relais insgesamt, als in M Gruppen $G_0$, $G_1$, ..., $G_i$, ...$G_{M-1}$ gruppiert sind, wobei jede von einer jeweiligen Anzahl $NG_0$, $NG_1$, ..., $NG_i$, ... $NG_{M-1}$ von aufeinanderfolgenden Relais $RL^i_0$, $RL^i_1$, ..., $RL^i_l$, ..., $RL^i_{NG_i-1}$, vom Stromunterstation-Trennschalterrelais beginnt und dieses einschließt, und

wobei die jeweiligen Auslösezeitintervalle für alle jeweiligen Trennschalterrelais in einer gegebenen Gruppe $G_i$ mit einem gegebenen Wert von i konfiguriert sind, um im Wesentlichen den gleichen Wert aufzuweisen, und das Auslösezeitintervall jedes Trennschalterrelais in einer Gruppe $G_i$ angeordnet ist, um größer zu sein als das Auslösezeitintervall jedes Trennschalterrelais in einer Gruppe $G_{i+1}$, wobei der Unterschied zwischen den Auslösezeitintervallen der nachfolgenden Gruppen vorbestimmt ist;

wobei das Totzeitintervall jedes Relais $RL^i_l$ nach dem Fallen des ersten Trennschalters konfiguriert ist, um im Wesentlichen den gleichen Wert für einen gegebenen Wert des Index l aufzuweisen und um geringer als das Totzeitintervall für ein nachfolgendes Relais $RL^i_{l+1}$ in derselben Gruppe $G_i$ zu sein, und wobei das Totzeitintervall nach dem Fallen des zweiten Trennschalters und vor der zweiten Wiederschließhandlung konfiguriert ist, um den gleichen Wert für alle Trennschalterrelais aufzuweisen, wobei der Unterschied zwischen den Totzeitintervallen der nachfolgenden Relais vorbestimmt ist;

wobei jedes Trennschalterrelais zum Sperren seines jeweiligen Trennschalters nach zweimaligem Fallen konfiguriert ist, vorausgesetzt, dass das entsprechende Wiederschließzeitintervall nach dem ersten Fallen des Trennschalters und die relevante Gruppenauslösezeit im Wesentlichen denselben Wert anzeigen und/oder der vorprogrammierte Zeitgeber jedes Relais, welches durch die erste Auslösehandlung gefallen ist und den Ausschluss des Trennschalters auslöst, wenn der Trennschalter am Ende der vom Zeitgeber programmierten Zeit ist, unter Berücksichtigung speziell bestimmter Toleranzen, und das zweite Totzeitintervall vor der zweiten Wiederschließhandlung konfiguriert sind, um im Wesentlichen den gleichen Wert für alle Trennschalterrelais aufzuweisen;

- für einen elektrischen Fehler, welcher einen gerichteten Nullsystemstrom $I_0$ verursacht, die N+1 Nullsystemstromrichtungstrennschalterrelais als $RL_0$, ..., $RL_i$, ..., $RL_N$ betrachtet werden und die Auslösezeit für jedes Relais $RL_i$ konfiguriert ist, um einen Wert größer als die Auslösezeit für einen nachfolgenden Relais $RL_{i+1}$ aufzuweisen, wobei der Unterschied zwischen den Auslösezeiten aufeinanderfolgender Relais vorbestimmt ist und die Trennschalterrelais programmiert sind, um die jeweiligen Trennschalter nach einmaligem Auslösen bei Auftreten des elektrischen Fehlers, welcher einen gerichteten Nullsystemstrom $I_0$ verursacht, zu sperren.

33. System zum Schützen, zum automatischen in Abschnitte Teilen und zum erneuten Konfigurieren einer Mittelspannungsverteilungsleitung gegen elektrische Defekte nach Anspruch 32, **dadurch gekennzeichnet, dass**

- für den elektrischen Fehler, welcher einen von wenigstens zwei Überströmen $I_>$, $I_{>>}$ verursacht, jedes Trennschalterrelais $RL^i_I$ konfiguriert ist, um

ein Auslösezeitintervall gleich mit $t_{trip\_}G_0$-i*$\Delta_{OVtrip}$ aufzuweisen, wobei $t_{trip\_}G_0$ die Auslösezeit für alle Trennschalterrelais $RL^0_I$ in der Gruppe $G_0$ ist, wobei der Wert von i der Index der Gruppe $G_i$ ist, zu welcher jedes Trennschalterrelais $RL^i_I$ gehört und wobei $\Delta_{OVtrip}$ ein Zeitinkrement ist, wobei $t_{trip\_G0}$ und $\Delta_{OVtrip}$ vorbestimmt sind;

ein Totzeitintervall - geöffnete Trennschalterkontakte - nach dem Fallen des ersten Trennschalters gleich mit $t_d$ * (I+1) aufzuweisen, wobei $t_d$ gleich dem Totzeitintervall des ersten Trennschalterrelais $RL^i_0$ jeder Gruppe $G_i$ ist und vorbestimmt ist und wobei der Wert von I der Index des Trennschalterrelais $RL^i_I$ in jeder jeweiligen Gruppe $G_i$ ist,

- für einen elektrischen Fehler, welcher einen gerichteten Nullsystemstrom $I_0$ verursacht, jeder $RL_j$ konfiguriert ist, ein Auslösezeitintervall gleich mit $\Delta_{I0trip}$ * (N-j+1) aufzuweisen, wobei j der Index des betroffenen Trennschalterrelais $RL_j$ ist und wobei $\Delta_{I0trip}$ die Auslösezeit des Trennschalterrelais $RL_N$ und vorbestimmt ist.

34. System zum Schützen, zum automatischen in Abschnitte Teilen und zum erneuten Konfigurieren einer Mittelspannungsverteilungsleitung gegen elektrische Defekte nach einem beliebigen der Ansprüche 32 und 33, **dadurch gekennzeichnet, dass** die Mittel, welche eingesetzt werden, um die erforderlichen Trennschalterrelais mit Eingaben wie dem Definieren von M Gruppen $G_0$, $G_1$, ..., $G_i$, ...$G_{M-1}$, der jeweiligen Anzahlen $NG_0$, $NG_1$, ..., $NG_i$, ...$NG_{M-1}$ von aufeinanderfolgenden Relais $RL^i_0$, $RL^i_1$, ..., $RL^i_I$, ..., $RL^i_{NG_i}$ in jeder Gruppe $G_i$ usw. zu programmieren, wobei die Parameter, wie $t_{trip\_}G_0$, i, $\Delta_{OVtrip}$ usw., die Bidirektionabilität und die Sensordaten und Ähnliches sind, die Zeitgeber- und Datenverarbeitungsmittel sind, welche in jedem einzelnen der Trennschalterrelais umfasst sind.

35. System zum Schützen, zum automatischen in Abschnitte Teilen und zum erneuten Konfigurieren einer Mittelspannungsverteilungsleitung gegen elektrische Defekte nach Anspruch 34, **dadurch gekennzeichnet, dass** die Trennschalterrelais Mikroprozessor basierte Trennschalterrelais sind und die Zeitgeber- und Datenverarbeitungsmittel der(die) Mikroprozessor(en) sind, welche in jedem jeweiligen Mikroprozessor basierten Trennschalterrelais umfasst sind.

**Revendications**

1. Sous-station de transformation, transformant l'énergie électrique d'une tension moyenne en une basse tension, connectée en série dans une ligne de distribution électrique triphasée moyenne tension entre les bornes d'entrée triphasées (20, 20') et les bornes de sortie triphasées (20', 20) de ladite ligne de distribution, ladite sous-station de transformation comprenant :

au moins un transformateur de distribution (4) comprenant des bornes moyenne tension triphasées (30) pour transformer l'énergie électrique d'une moyenne tension en une basse tension ;
au moins un panneau de distribution basse tension (5) pour distribuer ladite énergie électrique transformée ;
un appareillage de commutation moyenne tension connecté électriquement aux dites bornes moyenne tension triphasées (30) dudit au moins un transformateur de distribution (4) et aux dites bornes d'entrée triphasées (20, 20') et aux dites bornes de sortie triphasées (20', 20) de ladite ligne de distribution moyenne tension, pour fournir l'énergie électrique et une protection au dit au moins un transformateur de distribution (4), **caractérisée en ce que** ladite sous-station de transformation comprend en outre un disjoncteur moyenne tension (6) connecté électriquement en parallèle avec les bornes d'au moins une partie dudit appareillage de commutation moyenne tension, et ledit disjoncteur (6) est également connecté électriquement en série avec ladite ligne de distribution électrique moyenne tension entre lesdites bornes d'entrée triphasées (20, 20') et lesdites bornes de sortie triphasées (20', 20) de ladite ligne de distribution, dans laquelle ledit disjoncteur moyenne tension (6) est verrouillé avec ledit appareillage de commutation moyenne tension manuellement et/ou électriquement et/ou automatiquement.

2. Sous-station de transformation selon la revendication 1, **caractérisée en ce que** ladite au moins une partie dudit appareillage de commutation moyenne tension comprend :

un commutateur à coupure en charge à trois positions (a-OFF-b) (2), ledit commutateur à coupure en charge à trois positions (a-OFF-b) (2) comprenant un ensemble de trois contacts mobiles (c) connectés électriquement aux dites bornes moyenne tension triphasées (30) dudit au moins un transformateur de distribution (4), un premier ensemble de trois contacts fixes (a) connectés à un premier ensemble de trois douilles dudit disjoncteur (6) et un deuxième ensemble de trois contacts fixes (b) connectés électriquement à un deuxième ensemble de trois douilles dudit disjoncteur (6).

**3.** Sous-station de transformation selon la revendication 2, **caractérisée en ce que** ledit appareillage de commutation moyenne tension comprend en outre :

un premier commutateur de déconnexion et de mise à la masse à vide à trois positions (3), ledit premier commutateur de déconnexion et de mise à la masse à vide à trois positions (3) comportant un premier ensemble de trois contacts fixes connectés au dit premier ensemble de trois contacts fixes (a) dudit commutateur à coupure en charge à trois positions (a-OFF-b) (2), un ensemble de mise à la masse de trois contacts fixes connectés électriquement à la masse, et un ensemble de trois contacts mobiles connectés électriquement aux dites bornes d'entrée triphasées (20, 20') de ladite ligne de distribution ; et

un deuxième commutateur de déconnexion et de mise à la masse à vide à trois positions (3'), ledit deuxième commutateur de déconnexion et de mise à la masse à vide à trois positions (3') comportant un premier ensemble de trois contacts fixes connectés au dit deuxième ensemble de contacts fixes (a) dudit commutateur à coupure en charge à trois positions (a-OFF-b) (2), un ensemble de mise à la masse de trois contacts fixes connectés électriquement à la masse, et un ensemble de trois contacts mobiles connectés électriquement aux dites bornes de sortie triphasées (20', 20) de ladite ligne de distribution.

**4.** Sous-station de transformation selon la revendication 2, **caractérisée en ce que** ledit appareillage de commutation moyenne tension comprend en outre :

deux commutateurs de mise à la masse (7, 7'), chacun desdits deux commutateurs de mise à la masse (7, 7') étant connecté électriquement respectivement aux dits deux ensembles (a, b) de trois contacts fixes dudit commutateur à coupure en charge à trois positions (a-OFF-b) (2).

**5.** Sous-station de transformation selon la revendication 4, **caractérisée en ce que** ledit appareillage de commutation moyenne tension comprend en outre :

un commutateur de mise à la masse (7"), ledit commutateur de mise à la masse (7") étant connecté électriquement au dit ensemble de trois contacts mobiles (c) dudit commutateur à coupure en charge à trois positions (a-OFF-b) (2) qui sont connectés électriquement aux dites bornes moyenne tension triphasées (30) dudit au moins un transformateur de distribution (4).

**6.** Sous-station de transformation selon la revendication 4, **caractérisée en ce que** ledit appareillage de commutation moyenne tension comprend en outre :

un autre commutateur à coupure en charge à trois positions (2'), ledit autre commutateur à coupure en charge à trois positions (2') étant connecté électriquement entre lesdites bornes moyenne tension triphasées (30) dudit au moins un transformateur de distribution (4) et ledit commutateur à coupure en charge à trois positions (a-OFF-b) (2), ledit autre commutateur à coupure en charge à trois positions (2') comprenant un premier ensemble de trois contacts fixes connectés électriquement à la masse, un deuxième ensemble de trois contacts fixes connectés au dit ensemble de trois contacts mobiles (c) dudit commutateur à coupure en charge à trois positions (a-OFF-b) (2), et un ensemble de trois contacts mobiles est connecté électriquement aux dites bornes moyenne tension triphasées (30) dudit au moins un transformateur de distribution (4).

**7.** Sous-station de transformation selon la revendication 1, **caractérisée en ce que** ladite au moins une partie dudit appareillage de commutation moyenne tension comprend :

des premier et deuxième commutateurs à coupure en charge et de mise à la masse à trois positions (2", 2"') connectés électriquement entre lesdites bornes moyenne tension triphasées (30) dudit au moins un transformateur de distribution (4) et ledit disjoncteur moyenne tension (6'), de sorte qu'un premier ensemble de contacts fixes dudit premier commutateur à coupure en charge et de mise à la masse à trois positions (2") soient connectés électriquement aux dites bornes moyenne tension triphasées (30) dudit au moins un transformateur de distribution (4), qu'un deuxième ensemble de contacts fixes dudit premier commutateur à coupure en charge et de mise à la masse à trois positions (2") soient connectés électriquement à la masse et qu'un ensemble mobile de trois contacts fixes dudit premier commutateur à coupure en charge et de mise à la masse à trois positions (2") soient connectés à un premier ensemble de trois douilles dudit disjoncteur (6) qui sont connectées électriquement directement aux dites bornes d'entrée triphasées (20, 20') de ladite ligne de distribution, qu'un premier ensemble de trois contacts fixes dudit deuxième commutateur à coupure en charge et de mise à la masse à trois positions (2''') soient connectés électriquement aux dites bornes moyenne tension triphasées (30) dudit au moins un transformateur de distribution (4), qu'un deuxième ensemble de trois contacts fixes dudit deuxième commutateur à coupure en charge et de mise à la masse à trois positions (2''') soient connectés électriquement à la masse et qu'un ensemble mobile de trois contacts fixes dudit deuxième commutateur à coupure en charge et de mise à la masse à trois positions (2''') soient connectés au deuxième ensemble de trois douilles dudit disjoncteur (6) qui sont connectées électriquement directement aux dites bornes de sortie triphasées (20', 20) de ladite ligne de distribution, et qu'ils soient verrouillés de manière à ce que, lorsque l'un est dans la position ouverte (N.O.), l'autre soit dans la position fermée (N.C.) et vice-versa.

**8.** Sous-station de transformation selon la revendication 7, **caractérisée en ce que** ladite au moins une partie dudit appareillage de commutation moyenne tension comprend en outre :

     un commutateur de mise à la masse (7") qui est connecté électriquement au dit premier ensemble de trois contacts fixes desdits premier et deuxième commutateurs à coupure en charge et de mise à la masse à trois positions (2", 2''') qui sont connectés électriquement aux dites bornes moyenne tension triphasées (30) dudit au moins un transformateur de distribution (4).

**9.** Sous-station de transformation selon la revendication 7, **caractérisée en ce que** ladite au moins une partie dudit appareillage de commutation moyenne tension comprend en outre :

     un commutateur de mise à la masse (2'), ledit commutateur de mise à la masse (2') étant connecté électriquement entre les bornes moyenne tension triphasées (30) dudit au moins un transformateur de distribution (4) et lesdits premier et deuxième commutateurs à coupure en charge et de mise à la masse à trois positions (2", 2'''), de sorte que l'un des ensembles de contacts fixes dudit commutateur de mise à la masse (2') soit connecté électriquement à la masse, qu'un autre ensemble de trois contacts fixes dudit commutateur de mise à la masse (2') soit connecté électriquement aux premiers ensembles respectifs de contacts fixes des premier et deuxième commutateurs à coupure en charge et de mise à la masse à trois positions (2", 2''') qui sont connectés électriquement respectivement l'un à l'autre, et qu'un ensemble de trois contacts mobiles dudit commutateur de mise à la masse (2') soient connectés électriquement aux dites bornes moyenne tension triphasées (30) dudit au moins un transformateur de distribution (4).

**10.** Sous-station de transformation selon la revendication 8 ou 9, **caractérisée en ce que** ledit appareillage de commutation moyenne tension comprend en outre :

     deux sectionneurs (10, 10'), lesdits deux sectionneurs (10, 10') étant connectés électriquement de sorte qu'un premier ensemble de trois contacts d'un premier sectionneur (10) soient connectés électriquement à la fois à un premier ensemble de trois douilles dudit disjoncteur (6) et à un ensemble de trois contacts mobiles dudit premier commutateur à coupure en charge et de mise à la masse à trois positions (2"), et qu'un deuxième ensemble de contacts dudit premier sectionneur (10) soient connectés électriquement aux dites bornes d'entrée triphasées (20, 20') de ladite ligne de distribution, et qu'un premier ensemble de trois contacts d'un deuxième sectionneur (10') soient connectés électriquement à la fois au deuxième ensemble de trois douilles dudit disjoncteur (6) et à l'ensemble de trois contacts mobiles dudit deuxième commutateur à coupure en charge et de mise à la masse à trois positions (2'''), et qu'un deuxième ensemble de contacts dudit deuxième sectionneur (10') soient connectés électriquement aux dites bornes de sortie triphasées (20', 20) de ladite ligne de distribution.

**11.** Sous-station de transformation selon la revendication 1, **caractérisée en ce que** ledit appareillage de commutation moyenne tension comprend :

     des premier et deuxième commutateurs à coupure en charge à deux positions (11, 11') connectés électriquement entre lesdites bornes moyenne tension triphasées (30) dudit au moins un transformateur de distribution (4) et ledit disjoncteur moyenne tension (6), un premier ensemble de trois contacts fixes dudit premier commutateur à coupure en charge à deux positions (11) étant connectés électriquement aux dites bornes moyenne tension triphasées (30) dudit au moins un transformateur de distribution (4) et un deuxième ensemble de trois contacts mobiles dudit premier commutateur à coupure en charge à deux positions (11) étant connectés électriquement à un premier ensemble de trois douilles dudit disjoncteur (6), et un premier ensemble de trois contacts fixes dudit deuxième commutateur à coupure en charge à deux positions (11') étant connectés électriquement aux dites bornes moyenne tension triphasées (30) dudit au moins un transformateur de distribution (4) et le deuxième ensemble de trois contacts mobiles dudit deuxième commutateur à coupure en charge à deux positions (11') étant connectés électriquement au deuxième ensemble de trois douilles dudit disjoncteur (6) ;

des premier et deuxième commutateurs de déconnexion et de mise à la masse à vide à trois positions (3, 3') connectés électriquement de sorte que l'ensemble de mise à la masse de trois contacts fixes dudit premier commutateur de déconnexion et de mise à la masse à vide à trois positions (3) soient connectés électriquement à la masse, que l'autre ensemble de trois contacts fixes dudit commutateur (3) soient connectés électriquement à la fois au premier ensemble de trois douilles dudit disjoncteur (6) et au deuxième ensemble de trois contacts mobiles dudit premier commutateur à coupure en charge à deux positions (11) et qu'un ensemble de trois contacts mobiles dudit premier commutateur de déconnexion et de mise à la masse à vide à trois positions (3) soient connectés aux dites bornes d'entrée triphasées (20, 20') de ladite ligne de distribution et que l'ensemble de mise à la masse de trois contacts fixes dudit deuxième commutateur de déconnexion et de mise à la masse à vide à trois positions (3') soient connectés électriquement à la masse, que l'autre ensemble de trois contacts fixes du commutateur (3') soient connectés électriquement à la fois au deuxième ensemble de trois douilles dudit disjoncteur (6) et à un deuxième ensemble de trois contacts mobiles dudit deuxième commutateur à coupure en charge à deux positions (11') et que l'ensemble de trois contacts mobiles dudit deuxième commutateur de déconnexion et de mise à la masse à vide à trois positions (3') soient connectés aux dites bornes de sortie triphasées (20', 20) de ladite ligne de distribution.

**12.** Sous-station de transformation selon la revendication 11, **caractérisée en ce que** ledit appareillage de commutation moyenne tension comprend en outre :

un commutateur de mise à la masse (7"), ledit commutateur de mise à la masse (7") étant connecté électriquement au dit premier ensemble de trois contacts fixes desdits premier et deuxième commutateurs à coupure en charge à deux positions (11, 11') qui sont connectés électriquement aux dites bornes moyenne tension triphasées (30) dudit au moins un transformateur de distribution (4).

**13.** Sous-station de transformation selon la revendication 11, **caractérisée en ce que** ledit appareillage de commutation moyenne tension comprend en outre :

un commutateur à coupure en charge et de mise à la masse à trois positions (2'), ledit commutateur à coupure en charge et de mise à la masse à trois positions (2') étant connecté électriquement entre le transformateur de distribution (4) et les commutateurs à coupure en charge (11, 11'), de sorte qu'un ensemble de trois contacts fixes dudit commutateur à coupure en charge et de mise à la masse à trois positions (2') soient connectés électriquement à la masse, qu'un autre ensemble de trois contacts fixes dudit commutateur d'interruption et de mise à la masse (2') soient connectés électriquement aux deux ensembles respectifs de trois contacts fixes desdits premier et deuxième commutateurs à coupure en charge à deux positions (11, 11') qui sont respectivement connectés électriquement l'un à l'autre, et que l'ensemble de trois contacts mobiles dudit commutateur à coupure en charge et de mise à la masse à trois positions (2') soient connectés électriquement aux dites bornes moyenne tension triphasées (30) dudit au moins un transformateur de distribution (4).

**14.** Sous-station de transformation selon la revendication 1, **caractérisée en ce que** ledit appareillage de commutation moyenne tension comprend :

un commutateur de déconnexion, de mise à la masse et à coupure en charge à trois positions du type à lame en V (3A) avec son ensemble de trois contacts mobiles connectés électriquement aux dites bornes d'entrée triphasées (20, 20') de ladite ligne de distribution, un premier ensemble de trois contacts fixes avec une capacité de freinage de charge de courant de transformateur connectés électriquement au dit ensemble de bornes moyenne tension triphasées (30) dudit au moins un transformateur de distribution (4), un deuxième ensemble de trois contacts fixes connectés électriquement à un premier ensemble de trois douilles dudit disjoncteur (6), et le troisième ensemble de mise à la masse de trois contacts fixes connectés électriquement à la masse,

un autre commutateur de déconnexion, de mise à la masse et à coupure en charge à trois positions du type à lame en V (3A') avec son ensemble de trois contacts mobiles connectés électriquement au dit ensemble de bornes de sortie triphasées (20', 20) de ladite ligne de distribution, un premier ensemble de trois contacts fixes avec une capacité de freinage de charge de courant de transformateur connectés électriquement au dit ensemble de bornes moyenne tension triphasées (30) dudit au moins un transformateur de distribution (4), un deuxième ensemble de trois contacts fixes connectés électriquement à un deuxième ensemble de douilles du disjoncteur à vide (6), et le troisième ensemble de mise à la masse de ses contacts fixes connectés électriquement à la masse.

15. Sous-station de transformation selon la revendication 14, **caractérisée en ce que** ledit appareillage de commutation moyenne tension comprend en outre :

un commutateur de mise à la masse (7") connecté électriquement au dit ensemble de bornes moyenne tension triphasées (30) dudit au moins un transformateur de distribution (4).

16. Sous-station de transformation selon la revendication 14, **caractérisée en ce que** ledit appareillage de commutation moyenne tension comprend en outre :

un commutateur à coupure en charge et de mise à la masse (2'), ledit commutateur à coupure en charge et de mise à la masse (2') étant connecté électriquement entre lesdites bornes moyenne tension triphasées (30) dudit au moins un transformateur de distribution (4) et lesdits premier et deuxième commutateurs de déconnexion, de mise à la masse et à coupure en charge à trois positions de type à lame en V (3A, 3A'), de sorte qu'un ensemble de trois contacts fixes dudit commutateur (2') soient connectés électriquement à la masse, qu'un autre ensemble de trois contacts fixes dudit commutateur (2') soient connectés électriquement aux ensembles respectifs de lames de coupure en charge fixes des commutateurs de déconnexion, de mise à la masse et à coupure en charge à trois positions de type à lame en V (3A, 3A') qui sont respectivement connectés électriquement l'un à l'autre, et l'ensemble de trois contacts mobiles dudit commutateur (2') est connecté aux dites bornes moyenne tension triphasées (30) dudit au moins un transformateur de distribution (4).

17. Sous-station de transformation selon l'une quelconque des revendications précédentes, **caractérisée en ce que** ledit disjoncteur moyenne tension (6) est un disjoncteur moyenne tension retirable (6'), les douilles dudit disjoncteur retirable (6') étant directement connectées électriquement aux dites bornes d'entrée triphasées (20, 20') et aux dites bornes de sortie triphasées (20', 20) respectivement de ladite ligne de distribution.

18. Sous-station de transformation selon l'une quelconque des revendications 2 à 17, **caractérisée en ce qu'**au moins l'un des commutateurs (2, 2', 2", 2''', 7, 7', 7", 11, 11') dudit appareillage de commutation moyenne tension est d'un type moyenne tension.

19. Sous-station de transformation selon l'une quelconque des revendications 2 à 18, **caractérisée en ce qu'**au moins l'un des commutateurs (2, 2', 2", 2''', 7, 7', 7", 11, 11') dudit appareillage de commutation moyenne tension est d'un type à gestion de courant de défaut.

20. Sous-station de transformation selon l'une quelconque des revendications 2 à 19, **caractérisée en ce que** les commutateurs (2, 2', 2", 2''', 3, 3', 3A, 3A', 7, 7', 7", 10, 10', 11, 11') dudit appareillage de commutation moyenne tension sont conformes aux normes CEI.

21. Sous-station de transformation selon l'une quelconque des revendications précédentes, **caractérisée en ce que** le diélectrique utilisé pour lesdits commutateurs (2, 2', 2", 2''', 3, 3', 3A, 3A', 7, 7', 7", 10, 10', 11, 11') dudit appareillage de commutation moyenne tension et dudit disjoncteur (6) est l'un de l'air, d'esters, d'une huile minérale ou de silicone, d'un diélectrique solide et du SF6, ou une combinaison de ceux-ci.

22. Sous-station de transformation selon l'une quelconque des revendications précédentes, **caractérisée en ce que** à la fois ledit disjoncteur (6) et lesdits différents commutateurs (2, 2', 2", 2''', 3, 3', 3A, 3A', 7, 7', 7", 10, 10', 11, 11') dudit appareillage de commutation moyenne tension sont situés dans le même contenant (G), avec son diélectrique correspondant, et ledit contenant (G) est relié, par l'intermédiaire d'au moins un évent de pression (B) situé à proximité ou dans le fond dudit contenant (G), à un contenant secondaire (G').

23. Sous-station de transformation selon la revendication 22, **caractérisée en ce qu'**au moins un transformateur de distribution (4) est situé à l'intérieur dudit contenant (G).

24. Sous-station de transformation selon l'une quelconque des revendications 22 et 23, **caractérisée en ce que** ledit contenant (G) est rempli d'un fluide diélectrique exempt d'oxygène (A), et ledit contenant secondaire (G') est rempli d'air ou d'un gaz exempt d'oxygène et, en option, d'un matériau absorbant la chaleur (C).

25. Sous-station de transformation selon la revendication 24, **caractérisée en ce que** ledit gaz exempt d'oxygène est l'azote.

26. Sous-station de transformation selon l'une quelconque des revendications 21 à 25, **caractérisée en ce que** ledit contenant secondaire (G') est pourvu d'au moins un autre évent (B') reliant le contenant secondaire (G') à un autre contenant secondaire (G"), chacun dudit contenant secondaire et dudit autre contenant secondaire (G', G") étant rempli soit d'un gaz exempt d'oxygène, soit d'air, et, en option, d'un matériau absorbant la chaleur (C), et ledit autre contenant secondaire (G") étant construit pour créer un labyrinthe de refroidissement dudit au moins un évent de pression (B') jusqu'à au moins un autre évent de pression (B'), lesdits évents de pression (B, B') agissant d'une manière en cascade.

27. Sous-station de transformation selon l'une quelconque des revendications 21 à 26, **caractérisée en ce que** le disjoncteur (6) est situé dans sa propre enceinte, à l'extérieur dudit contenant (G), est du type retirable et est connecté à une pluralité de commutateurs (2, 2', 2", 2''', 3, 3', 7, 7', 7", 3A, 3A', 10, 10', 11, 11') de ladite installation de commutation moyenne tension par l'intermédiaire d'un ensemble de six douilles de disjoncteur de traversée (D').

28. Sous-station de transformation selon la revendication 27, **caractérisée en ce que** ledit contenant (G) est pourvu d'un ensemble de six douilles (D) pour les connexions à ladite borne d'entrée triphasée (20, ou 20') et ladite borne de sortie triphasée (20', 20) de ladite ligne de distribution moyenne tension, d'un ensemble similaire supplémentaire de trois douilles (D) pour les connexions de câble au dit disjoncteur (6) et d'un ensemble de trois douilles (D") pour la connexion aux dites bornes moyenne tension triphasées (30) dudit au moins un transformateur de distribution (4).

29. Sous-station de transformation selon l'une quelconque des revendications précédentes, **caractérisée en ce qu'**elle comprend des dispositifs de détection et de protection à base de microprocesseur et des moyens de communication, programmation et coordination pertinents adaptés pour actionner ledit disjoncteur (6) verrouillé avec les commutateurs (2, 2', 2", 2''', 3, 3', 7, 7', 7", 3A, 3A', 10, 10', 11, 11') relatifs dudit appareillage de commutation moyenne tension pour protéger et couper automatiquement ladite ligne de distribution conformément aux données collectées et traitées par les dispositifs de détection et de protection et pour fournir une protection au dit au moins un transformateur de distribution.

30. Sous-station de transformation selon la revendication 29, **caractérisée en ce que** lesdits dispositifs de détection et de protection comprennent des dispositifs pour détecter un courant, une tension, une pression, une température, une lumière, un niveau de fluide diélectrique et similaire, et sont situés dans au moins l'un des contenants (G, G', G") et/ou dans ledit au moins un réservoir du transformateur de distribution (4).

31. Sous-station de transformation selon l'une quelconque des revendications précédentes, **caractérisée en ce que** les moyens de traitement du relais à base de microprocesseur de disjoncteur du disjoncteur (6) respectif sont agencés pour, lors de l'apparition d'un défaut de surintensité dans le transformateur de distribution (4) respectif, déclencher l'opération d'ouverture dudit disjoncteur (6) respectif et par la suite pour actionner automatiquement, pendant l'intervalle de temps mort correspondant et avant la première opération et l'opération finale de réenclenchement dudit disjoncteur (6), le commutateur ou les commutateurs verrouillés pertinents dans l'appareillage de connexion respectif de sorte que ledit transformateur de distribution (4) soit déconnecté et isolé électriquement et/ou pour, lors de l'apparition d'un défaut homopolaire dont l'intensité est inférieure à une valeur spécifique, définie par l'opérateur de ligne, déclencher l'opération d'ouverture du ou des commutateurs pertinents dans l'appareillage de connexion respectif de sorte que ledit transformateur de distribution (4) soit déconnecté et isolé électriquement, sans déclencher une opération d'ouverture du disjoncteur du fait de l'apparition d'un défaut homopolaire inférieur à une valeur spécifique dans le transformateur de distribution respectif.

32. Système pour protéger, couper automatiquement et reconfigurer une ligne de distribution moyenne tension contre des défauts électriques, ladite ligne de distribution moyenne tension étant connectée à une pluralité de sous-stations de transformation selon l'une quelconque des revendications précédentes, laquelle est interconnectée en série avec une pluralité de N disjoncteurs pour une coupure de ligne automatique, et comportant des relais à base de microprocesseur de surintensité respectifs et/ou des relais de disjoncteur directionnels de courant homopolaire respectifs supplémentaires avec leur moyens de détection, de synchronisation et de traitement de données correspondants, dans lequel lesdits défauts électriques provoquent l'une d'au moins deux surintensités $I_>$, $I_{>>}$ et/ou un courant homopolaire directionnel $I_0$, **caractérisé en ce que**

- pour un défaut électrique générant l'une quelconque desdites au moins deux surintensités $I_>$, $I_{>>}$, les N relais de disjoncteur plus le relais de disjoncteur de sous-station de puissance, N+1 relais au total, sont considérés comme étant groupés en M groupes, $G_0$, $G_1$, ..., $G_i$, ..., $G_{M-1}$, chacun d'un nombre respectif $NG_0$, $NG_1$, ..., $NG_i$, ..., $NG_{M-1}$ de relais consécutifs, $RL^i_0$, $RL^i_1$, ..., $RL^i_I$ ..., $RL^i_{NGi-I}$, en commençant par le relais de disjoncteur de sous-station de puissance, et comprenant celui-ci, et

les intervalles de temps de déclenchement respectifs pour tous les relais de disjoncteur respectifs dans un groupe $G_i$ donné avec une valeur donnée de i sont agencés pour avoir sensiblement la même valeur, et l'intervalle de temps de déclenchement pour n'importe quel relais de disjoncteur dans un groupe $G_i$ est agencé pour être supérieur à l'intervalle de temps de déclenchement pour n'importe quel relais de disjoncteur dans un groupe consécutif $G_{i+1}$, la différence entre les intervalles de temps de déclenchement de groupes consécutifs étant prédéterminée ;

l'intervalle de temps mort pour chaque relais $RL^i_I$ après le premier déclenchement de disjoncteur est agencé pour avoir sensiblement la même valeur pour une valeur donnée de l'indice $I$, et pour être inférieur à l'intervalle de temps mort pour un relais consécutif $RL^i_{I+1}$ dans le même groupe $G_i$ et l'intervalle de temps mort après le deuxième déclenchement de disjoncteur et avant la deuxième opération de réenclenchement est agencé pour avoir la même valeur pour tous les relais de disjoncteur, la différence entre les intervalles de temps mort de relais consécutifs étant prédéterminée ;

dans lequel chaque relais de disjoncteur est configuré pour verrouiller son disjoncteur respectif après deux déclenchements pourvu que l'intervalle de temps de réenclenchement correspondant après le premier déclenchement de disjoncteur et le temps de déclenchement de groupe pertinent présentent sensiblement la même valeur, et/ou le registre d'horloge préprogrammé de chaque relais qui est déclenché par la première opération de déclenchement et qui déclenche le verrouillage du disjoncteur si le disjoncteur est ouvert à la fin du temps programmé des registres d'horloge, en prenant en considération des tolérances spécifiées, et le deuxième intervalle de temps mort avant la deuxième opération de réenclenchement sont agencés pour avoir sensiblement la même valeur pour tous les relais de disjoncteur ;

- pour un défaut électrique générant un courant homopolaire directionnel $I_0$, les N+1 relais homopolaires directionnels de disjoncteur sont considérés comme étant $RL_0$, ..., $RL_j$, ..., $RL_N$, et le temps de déclenchement pour n'importe quel relais $RL_j$ est agencé pour avoir une valeur supérieure au temps de déclenchement pour un relais consécutif $RL_{j+1}$, ladite différence entre les instants de déclenchement de relais consécutifs étant prédéterminée, et lesdits relais de disjoncteur étant configurés pour verrouiller les disjoncteurs respectifs après un déclenchement lors de l'apparition dudit défaut électrique générant un courant homopolaire directionnel $I_0$.

33. Système pour protéger, couper automatiquement et reconfigurer une ligne de distribution moyenne tension contre des défauts électriques selon la revendication 32, **caractérisé en ce que**

- pour ledit défaut électrique générant l'une quelconque desdites au moins deux surintensités $I_>$, $I_{>>}$, chaque relais de disjoncteur $RL^i_I$ est agencé pour avoir

un intervalle de temps de déclenchement égal à $t_{trip\_G0} - i * \Delta_{OVtrip}$, ledit $t_{trip\_G0}$ étant le temps de déclenchement pour tous les relais de disjoncteur $RL^0_I$ dans le groupe $G_0$, ladite valeur de i étant l'indice du groupe $G_i$ auquel chaque dit relais de disjoncteur $RL^i_I$ appartient, et ledit $\Delta_{OVtrip}$ étant un incrément de temps, lesdits $t_{trip\_G0}$ et $\Delta_{OVtrip}$ étant prédéterminés ;

un intervalle de temps mort - contacts de disjoncteur ouverts - après le premier déclenchement de disjoncteur égal à $t_d * (1 + 1)$, ledit $t_d$ étant l'intervalle de temps mort du premier relais de disjoncteur $RL^i_0$ de chaque groupe $G_i$ et étant prédéterminé, et ladite valeur de I étant l'indice du relais de disjoncteur $RL^i_1$, dans chaque groupe $G_i$ respectif,

- pour un défaut électrique générant un courant homopolaire directionnel $I_0$, chaque $RL_j$ est agencé pour avoir un temps de déclenchement égal à $\Delta_{I0trip} * (N - j + 1)$, où j est l'indice du relais de disjoncteur $RL_j$ en question, et $\Delta_{I0trip}$ est le temps de déclenchement du relais de disjoncteur $RL_N$ et prédéterminé.

34. Système pour protéger, couper automatiquement et reconfigurer ladite ligne de distribution moyenne tension selon l'une quelconque des revendications 32 et 33, **caractérisé en ce que** les moyens utilisés pour programmer les relais de disjoncteur nécessaires avec des entrées telles que définissant M groupes, $G_0$, $G_1$, ..., $G_i$, ..., $G_{M-1}$, des nombres respectifs $NG_0$, $NG_1$, ..., $NG_i$, ..., $NG_{M-1}$ de relais consécutifs, $RL^i_0$, $RL^i_1$, ..., $RL^i_1$, ..., $RL^i_{NGi}$, dans chaque groupe $G_i$, etc., les paramètres, tels que $t_{trip\_G0}$, i, $\Delta_{OVtrip}$,

etc., les lectures de bidirectionnalité et de capteur et similaire sont des moyens de synchronisation et de traitement de données inclus dans chacun des relais de disjoncteur.

35. Système pour protéger, couper automatiquement et reconfigurer ladite ligne de distribution moyenne tension selon la revendication 34, **caractérisé en ce que** lesdits relais de disjoncteur sont des relais de disjoncteur à base de microprocesseur et lesdits moyens de synchronisation et de traitement de données sont le ou les microprocesseurs inclus dans chaque relais de disjoncteur à base de microprocesseur respectif.

Figure 1

Figure 2

Figure 3

Figure 4A

Figure 4B

Figure 5A

Figure 5B

Figure 6A

Figure 6B

Figure 7A

Figure 7B

Figure 8A

## Figure 8B

Figure 9A

Figure 9B

Figure 10

Figure 11

2, 2', 2", 2''', 3, 3', 3A, 3A'
7, 7', 7", 10, 10', 11, 11'

Figure 12A

Figure 12B

B"    D"        A        2, 2', 2", 2"', 3, 3', 3A, 3A'
                         7, 7', 7", 10, 10', 11, 11'

G"                                              D

                                    C

                                                G'

B'                      B

# Figure 13A

2, 2', 2", 2''', 3, 3', 3A, 3A'
7, 7', 7", 10, 10', 11, 11'

Figure 13B

B''    D''    A    2, 2', 2'', 2''', 3, 3', 3A, 3A'
7, 7', 7'', 10, 10', 11, 11'

G

D'

G''

G'

B'    B    C

Figure 14A

2, 2', 2'', 2''', 3, 3', 3A, 3A'
7, 7', 7'', 10, 10', 11, 11'

B''    D''    A    4

G''

G

D'

B'    B    C

G'

Figure 14B

Figure 15A

2, 2', 2", 2''', 3, 3', 3A, 3A'
7, 7', 7", 10, 10', 11, 11'

Figure 15B

Figure 16

EP 2 289 138 B1

# Failure between $RL_3^I$ and $RL_4^I$ in $G_1$

(trip_time in $G_0$ > trip_time_1 in $G_1$)

**Figure 17B**

trip signal for breaker relays in $G_1$

$RL_0^I$ — trip_time_1, dead_time_0, reclos_time_01

reclos_time_01 ≠ trip_time_1
⇓
reset after fixed dead time

$RL_1^I$ — trip_time_1, dead_time_1, reclos_time_11

reclos_time_11 ≠ trip_time_1
⇓
reset after fixed dead time

$RL_2^I$ — trip_time_1, dead_time_2, reclos_time_21

reclos_time_21 ≠ trip_time_1
⇓
reset after fixed dead time

$RL_3^I$ — trip_time_1, dead_time_3, reclos_time_31

reclos_time_31 = trip_time_1
⇓
relay locking out

trip_time_1     fixed dead time

$t_{01}$

# Failure between $RL_3^0$ and $RL_4^0$ in $G_0$

trip signal for breaker relays in $G_0$

trip_time | fixed dead time

$RL_0^0$

trip_time

dead_time_0

reclos_time_0

reclos_time_0 ≠ trip_time
⇓
reset after fixed dead time

$RL_1^0$

trip_time

dead_time_1

reclos_time_1

reclos_time_1 ≠ trip_time
⇓
reset after fixed dead time

$RL_2^0$

trip_time

dead_time_2

reclos_time_2

reclos_time_2 ≠ trip_time
⇓
reset after fixed dead time

$RL_3^0$

trip_time

dead_time_3

reclos_time_3

reclos_time_3 = trip_time
⇓
relay locking out

$t_0$

$t_1$

# Figure 17A

trip time waveform

$RL_0$

DZSC_trip_time_0

L/O

$RL_1$

DZSC_trip_time_1 < DZSC_trip_time_0    L/O

$RL_2$

DZSC_trip_time_2 <
DZSC_trip_time_1    L/O

DZSC_trip_time_N <
DZSC_trip_time_j

$RL_N$    L/O

# Figure 18

**EP 2 289 138 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2212747, O. Ormazabal

- FR 2341972, MERLIN GERIN